# EUROPEAN PATENT APPLICATION

(11) **EP 1 684 222 A1**
(43) Date of publication of application: **26.07.2006**
(21) Application number: 04818542.5
(22) Date of filing: 15.11.2004
(51) Int. Cl.: G06Q 10/00

(54) **LICENSE MANAGEMENT METHOD, INFORMATION PROCESSING APPARATUS, INFORMATION PROCESSING METHOD, AND PROGRAM**

(30) Priority: 14.11.2003 JP 2003385591
(71) Applicant: SONY CORPORATION, Tokyo 141-0001 (JP); MATSUSHITA ELECTRIC INDUSTRIAL CO., LTD., Kadoma-shi, Osaka 571-8501 (JP)
(72) Inventor: KITAHARA, Jun c/o Sony Corporation, Tokyo 1410001 (JP); YAMASHITA, Masami c/o Sony Corporation, Tokyo 1410001 (JP); ITO, Tetsunori c/o Sony Corporation, Tokyo 1410001 (JP); YAMAMOTO, Masaya, Hirakata-shi, Osaka 5731151 (JP); ONODA, Sen'ichi, Toyonaka-shi, Osaka 5600003 (JP); MURAKAMI, Hiroki, Suita-shi, Osaka 5650862 (JP)
(74) Representative: Robinson, Nigel Alexander Julian
(86) International application number: PCT/JP2004/016958
(87) International publication number: WO 2005/048149

(57) **Abstract**

The present invention is directed to an information processing apparatus adapted for processing contents provided by contents distribution service. To contents distributed by a contents server (12), a sublicense which prescribes utilization conditions of the respective contents is added. From a license server (13), a main license which prescribes utilization condition of the entirety of contents distributed via channel that user contracts is provided. When it is instructed that contents are reproduced, reproduction of contents is permitted at a receiver (15) in the case where utilization conditions prescribed by the sublicense and the main license are both satisfied.

## Description

### Technical Field

The present invention relates to a license management method, an information processing apparatus, an information processing method and a program, and more particularly to a license management method, an information processing apparatus, an information processing method and a program which permit users to easily acquire licenses, and to permit contents distribution entrepreneur (enterpriser) to provide license which can comply with services of various forms while realizing protection of copyright of contents.

This Application claims priority of Japanese Patent Application No. 2003-385591, filed on November 14, 2003, the entirety of which is incorporated by reference herein.

### Background Art

In recent years, with development of arrangement or preparation of infrastructure, there have been realized various contents distribution services such as service using broadcasting wave and/or service using Internet, etc.

In such contents distribution services, there is generally required license which prescribes utilization condition of contents in utilizing the contents in order to permit only user who has contracted with contents distribution entrepreneur to utilize contents, and in order to ensure authorized (justified) utilization of contents by user to have ability to protect copyright of contents.

As the management system for license, there are, e.g., a system of performing communication based on public-key cryptographic base (or public-key encryption scheme) between receiver installed (provided) in home, etc. and server which perform management of license to offer license to user through Internet, and/or system based on CAS (Conditional Access System).

In the system of performing management of license of communication based on the public-key cryptographic base, e.g., it is required to provide an access to a predetermined server every time contents are utilized to perform authentication (certification) by public-key certificate. Since license is provided only in the case where authentication by the public-key certificate holds, license can be offered only to authorized (justified) user, thus making it possible to realize protection of copyright of contents. In addition, it is also possible to exclude unautholized user or users by list called CRL (Certificate Revocation List) from users who have accessed.

On the other hand, in the system of performing management of license by CAS, encryption (scramble) is implemented to contents to be distributed so that they can be decoded by secret-key stored in card to be inserted into receiver installed (provided) in home of user, etc. Accordingly, in the case where user utilizes contents, it is required to perform such contraction in units of channels to reserve only sports channel among cinema channel, sports channel and music channel to register information of secret-key with respect to distribution entrepreneur. Since scramble (encryption) is implemented so that encryption can be released (decoded) by the registered secret-key, only authorized user is permitted to utilize contents also by this system.

However, in the system of performing management of license by communication based on the public-key cryptographic base, it is necessary to perform authentication (certification) every time contents are utilized. It takes time or troublesomeness accordingly. For example, even in the case where cinema contents are desired to be viewed, it is impossible to immediately start corresponding viewing.

Moreover, in the system of performing management of license by the CAS, since contents distributed via the contracted channel can be all utilized, it is unnecessary to perform authentication every time contents are utilized. However, in this case, it is difficult for distribution entrepreneur to set different utilization conditions with respect to respective contents which are distributed via one channel. Namely, it is difficult to comply with services of various forms such that charge takes place every contents, and/or limitation of different number of utilizations is set every contents.

### Disclosure of the Invention

### Problems to be solved by the invention

An object of the present invention is to provide a license management method, an information processing apparatus, an information processing method and a program which solve problems that prior arts as described above have to permit user to easily acquire license.

Another object of the present invention is to provide a license management method, an information processing apparatus, an information processing method and a program which permit contents distribution entrepreneur to provide license capable of complying with services of various forms while realizing protection of copyright of contents.

The license management method according to the present invention is directed to a license management method of performing management of license used in a contents distribution service in which contract of one channel is made so that plural contents distributed via the one channel are permitted to be utilized, the license management method comprising: offering, to an information processing apparatus which accepts an offer of contents, a first license which prescribes utilization condition of the entirety of plural contents distributed via one channel; and offering, to the information processing apparatus, along with the contents, a second license which prescribes, in a manner different from the first license, utilization condition every contents, whereby in the case where the utilization condition prescribed by the first license and the utilization condition prescribed by the second license are both satisfied, the contents which have been offered along with the second license are permitted to be utilized at the information processing apparatus.

The information processing apparatus according to the present invention is directed to an information processing apparatus adapted for processing contents provided by a contents distribution service in which contract of one channel is made so that plural contents distributed via the one channel are permitted to be utilized, the information processing apparatus comprising: first acquisition means for acquiring a first license which prescribes utilization condition of the entirety of the plural contents distributed by one channel; and second acquisition means for acquiring, along with contents, a second license which is provided in a manner different from the first license and prescribes utilization condition every the contents; and control means for controlling output of the contents which have been provided along with the second license in the case where the utilization condition prescribed by the first license and the utilization condition prescribed by the second license are both satisfied.

The first acquisition means is permitted to acquire the first license provided in the state encrypted by public-key corresponding to a secret-key to be prepared.

The control means is permitted to decode, by using first key information provided along with the first license, second key information provided in the state encrypted along with the second license to decode encryption implemented to the contents by the second key information thus decoded.

The information processing apparatus according to the present invention may further comprise license management means for permitting any other information processing apparatus to utilize contents which have been provided along with the second license within the scope (limit) where the utilization condition prescribed by the first license and the utilization condition prescribed by the second license are both satisfied.

In the case where plural contents are distributed via one channel successively in terms of time, the second acquisition means serves to acquire, during distribution of the first contents, second license which prescribes utilization condition of second contents distributed subsequently to first contents, and the control means is permitted to control output of the second contents so that they are outputted subsequently to the first contents in the case where the utilization condition prescribed by the first license and the utilization condition prescribed by the second license which prescribes utilization condition of the second contents, which has been acquired by the second acquisition means, are both satisfied.

The information processing method according to the present invention is directed to an information processing method of processing contents provided by a contents distribution service in which contract of one channel is made so that plural contents distributed via the one channel are permitted to be utilized, the information processing method comprising: a first acquisition step of acquiring a first license which prescribes utilization condition of the entirety of plural contents distributed via one channel; a second acquisition step of acquiring, along with contents, a second license which is provided in a manner different from the first license and prescribes utilization condition every contents; and a control step of controlling output of the contents which have been provided along with the second license in the case where the utilization condition prescribed by the first license and the utilization condition prescribed by the second license are both satisfied.

The program according to the present invention is directed to a program for allowing computer to execute processing of contents provided by a contents distribution service in which contract of one channel is made so that plural contents distributed via the one channel are permitted to be utilized, the program comprising: a first acquisition step of acquiring a first license which prescribes utilization condition of the entirety of plural contents distributed via one channel; a second acquisition step of acquiring, along with the contents, a second license which is provided in a manner different from the first license and prescribes utilization condition every the contents; and a control step of controlling output of the contents which have been provided along with the second license in the case where the utilization condition prescribed by the first license and the utilization condition prescribed by the second license are both satisfied.

In the license management method according to the present invention, the first license which prescribes utilization condition of the entirety of plural contents distributed via one channel is offered to the information processing apparatus which accepts offer of contents. The second license which prescribes utilization condition every contents is offered in a manner different from the first license to the information processing apparatus. In the case where the utilization condition prescribed by the first license and the utilization condition prescribed by the second license are both satisfied, contents which have been provided along with the second license are permitted to be utilized at the information processing apparatus.

In the information processing apparatus, the information processing method and the program according to the present invention, the first license which prescribes utilization condition of the entirety of plural contents distributed via one channel is acquired, and the second license which prescribes utilization condition every contents, which is provided in a manner different from the first license, is acquired along with contents. Moreover, in the case where the utilization condition prescribed by the first license and the utilization condition prescribed by the second license are both satisfied, output of contents which have been provided along with the second license is controlled.

In accordance with the present invention, user can easily acquire license necessary for utilization of contents.

Moreover, in accordance with the present invention, contents distribution entrepreneur can distribute or deliver contents while realizing protection of copyright.

Further, in accordance with the present invention, contents distribution entrepreneur can provide licenses which can comply with services of various forms.

Still further objects of the present invention and practical merits obtained by the present invention will become more apparent from the description of embodiments which will be given below with reference to the attached drawings.

### Brief Description of the Drawings

FIG. 1 is a block diagram showing a configuration example of a contents distribution system to which the present invention is applied.
FIG. 2 is a view showing the relationship between sublicense and main license.
FIGS. 3A and 3B are views showing examples of information included in main license and sublicense.
FIG. 4 is a block diagram showing an example of configuration from a functional point of view (hereinafter simply referred to as a functional configuration example) of contents server and license server which are shown in FIG. 4.
FIG. 5 is a block diagram showing a functional configuration example of receiver shown in FIG. 1.
FIG. 6 is a flowchart for explaining license generation processing of license server.
FIG. 7 is a flowchart for explaining distribution data generation processing of contents server.
FIG. 8 is a flowchart for explaining processing performed among contents server, license server and receiver.
FIG. 9 is a flowchart subsequent to FIG. 8, which explains processing performed among contents server, license server and receiver.
FIG. 10 is a view showing a practical example of main license and sublicense.
FIG. 11 is a flowchart for explaining license acquisition processing of DRM controller.
FIG. 12 is a flowchart for explaining contents reproduction processing of DRM controller.
FIG. 13 is a flowchart for explaining contents reproduction processing of receiver controller.
FIG. 14 is a view showing export of license.
FIG. 15 is a view showing transfer of license.
FIG. 16 is a view showing an example of contents distributed by multicast.
FIG. 17 is a view showing another example of contents distributed by multicast.
FIG. 18 is a flowchart for explaining contents reproduction processing of receiver.
FIG. 19 is a block diagram showing a configuration example of personal computer.

### Best Mode for Carrying Out the Invention

Embodiments of the present invention will now be explained with reference to the attached drawings.

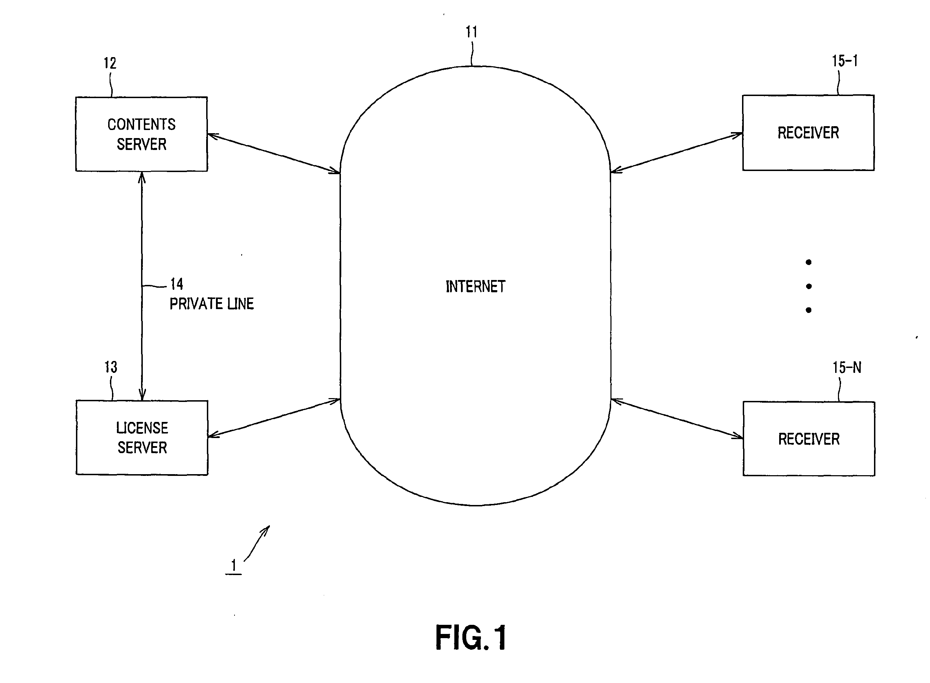

FIG. 1 is a view showing a configuration example of a contents distribution system 1 to which the present invention is applied.

The contents distribution system 1 comprises a contents server 12, a license server 13 and receivers 15-1 to 15-N which are connected to each other through an Internet 11. In the case where there is no necessity of individually discriminating between respective receivers 15-1 to 15-N, they are collectively called receivers 15 as occasion demands.

The contents server 12 serves to acquire contents which have been produced by, e.g., contents production company to distribute or deliver the contents thus acquired to the receivers 15 (receivers 15-1 to 15-N) through the Internet 11. The receivers 15 are installed (provided) in homes of users, etc. who contract with distribution entrepreneur who performs management of the contents distribution system 1 by utilizing contents that the contents server 12 distributes. For example, moving picture contents such as cinema and/or drama, etc., still picture contents news and/or weather forecast (report) consisting of text or still image, etc., and/or music contents, etc. are distributed by the contents server 12.

To contents distributed by the contents server 12, license for prescribing the utilization condition of the contents is added. The contents server 12 distributes, to the receiver 15, license which is generated by the license server 13 and is delivered through the private line 14 or the Internet 11, along with contents corresponding thereto. Hereinafter, the license which prescribes the utilization conditions of respective contents and is distributed from the contents server 12 along with contents will be called sublicense.

The license server 13 offers the sublicense to the contents server 12, and offers, to the receivers 15, licenses which prescribe utilization condition of the entirety of contents delivered via channels that respective users contract. Hereinafter, the license which prescribes the utilization condition of the entirety of contents distributed via one channel and are directly offered from the license server 13 to the respective receivers 15 will be called main license.

It is to be noted that while the contents server 12 and the license server 13 are illustrated respectively by one in FIG. 1, plural contents servers 12 and plural license servers 13 may be provided. By one server having function of the contents server 12 and function of the license server 13, distribution of contents and generation of the license may be also performed.

Here, the relationship between the sublicense and the main license will be explained.

For example, in the so-called subscription service to make contract on channel basis, channel for distributing only cinema, channel for distributing only drama and/or channel for distributing sports program, etc. are prepared. Thus, user contracts with one channel from those channels to have ability to view all contents distributed via the contracted channel.

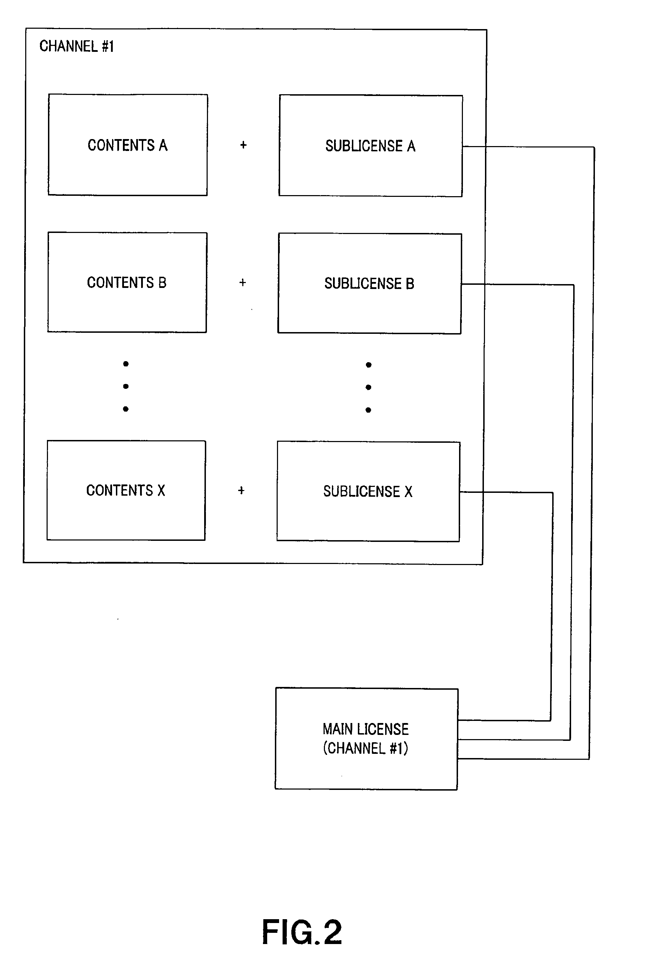

In FIG. 2, in such subscription service, it is indicated that contents A to X are distributed via channel #1. For example, in the case where user of the receiver 15-1 contracts with the channel #1, one main license which prescribes utilization condition of the entirety of contents A to X is offered to the receiver 15-1.

Moreover, it is shown in FIG. 2 that contents A to X and sublicenses A to X which prescribe respective utilization conditions correspond to each other. Along with the contents which have been selected by user, sublicense corresponding thereto is offered to the receiver 15-1. In the sublicense, there are included utilization right which prescribes utilization condition of corresponding contents and/or key information for decoding encryption implemented thereto, etc.

At the receiver 15-1, when it is instructed by user that, e.g., contents A are utilized, judgment as to whether or not reproduction of contents A is permitted is performed on the basis of the sublicense A transmitted from the contents server 12 along with the contents A and the main license of channel #1 which is offered from the license server 13 in advance. In the case where it is judged that such reproduction is permitted, reproduction of the contents A is performed. In concrete terms, only in the case where the utilization condition prescribed by the main license is satisfied, and the utilization prescribed by the sublicense A is also satisfied, reproduction of contents A is performed.

As stated above, in the contents distribution system 1 of FIG. 1, main license which prescribes utilization condition of the entirety of contents distributed via one channel and sublicense which prescribes respective utilization conditions of contents distributed via that channel are offered to users (receivers 15) via different paths. In the case where both utilization conditions are satisfied, contents are permitted to be utilized.

It is to be noted that the main license is encrypted by encryption key by mutual authentication and key exchange, which is based on asymmetric encryption technology prescribed by, e.g., ISO-9798-3. The main license thus encrypted is offered from the license server 13 to the receivers 15.

Returning to the explanation of FIG. 1, the receiver 15 reproduces, in accordance with instruction from user, contents on the basis of the sublicense provided from the contents server 12 along with contents and the main license provided from the license server 13. For example, display unit for outputting image and/or speaker for outputting sound, etc. are connected to the receiver 15 by wire or wireless system. Thus, contents which have been reproduced by the receiver 15 are outputted.

Since the sublicense is provided along with contents as stated above, there is not performed, at the receiver 15, such a processing to provide an access to server which performs management of license of contents to perform authentication (certification), etc every time reproduction of contents is instructed. Namely, it is possible to easily acquire license. As a result, it is possible to shorten time required from the time when user instructs reproduction of contents until that output is started.

Moreover, also for distribution entrepreneur, since not only utilization condition of the entirety of contents can be prescribed by the main license, but also utilization conditions of respective contents can be prescribed by the sublicense, it is possible to provide contents distribution services of various forms. For example, it is possible to prescribe complicated utilization condition which is difficult to prescribe by one license by employing a method of prescribing utilization term of the entirety of contents by the main license, and of prescribing the number of viewing operations of respective contents by the sublicense, etc.

For example, there can be also employed a method of prescribing, only by license distributed along with contents, utilization term (available period) of the contents and the number of viewing operations, but information of the available period would be also added to all contents distributed via a certain channel in this case. As a result, as compared to the case where information of available period common to all contents is collectively prescribed by the main license, data quantity is increased and communication time and/or processing time are elongated. Moreover, since key information included in the main license is required in order to utilize the sublicense as described later, security can be improved as compared to the case where two licenses are provided via one path.

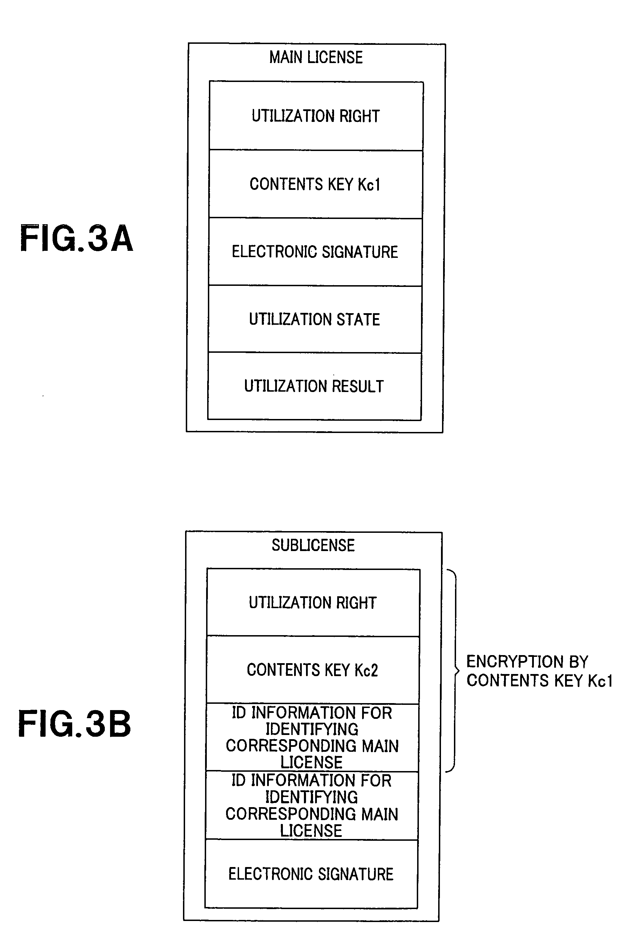

FIGS. 3A and 3B are views showing examples of information included in the main license and the sublicense.

As shown in FIG. 3A, there are included, in the main license, channel No. and/or name of channel (e.g., cinema channel), etc. that user contracts, etc. and are included utilization right for prescribing utilization condition of the entirety of contents distributed via that channel, contents key Kc1 which is encryption key of a portion of sublicense (utilization right, contents key Kc2, ID (identification) information), and electronic signature, utilization state and utilization result of main license preparing person (e.g., manager of the license server 13).

Since electronic signature is added, the receiver 15 can confirm an apparatus which has generated provided license. Moreover, the receiver 15 can confirm as to whether or not corresponding license is authorized license.

The utilization state and the utilization result are offered to the receiver 15 in the state where any data is not recorded, and are updated every time user utilizes contents. The utilization state indicates how, i.e., to what degree respective contents are utilized. For example, management of information indicating the fact that "contents A utilizable (available) ten times have been already utilized (available) once" or the fact that "contents A utilizable for ten hours have become already utilized for one hour" is performed by main license as utilization state. The utilization result indicates utilization history (past record) of contents. The content of the utilization result is notified from the receiver 15 to the server side, e.g., license server 13 as occasion demands.

As shown in FIG. 3B, in the sublicense, there are included utilization right which prescribes utilization conditions of respective contents, contents key Kc2 which is encryption key of contents, ID information of main license for identifying main license corresponding to that sublicense, and electronic signature of sublicense preparing person, e.g., manager of the license server 13.

The utilization right, the contents key Kc2 and the ID information of these information are encrypted by contents key Kc1 provided by the main license. Namely, in order to reproduce contents at the receiver 15, contents key Kc2 included in the sublicense is required. In order to acquire the contents key Kc2, contents key Kc1 included in the main license is required.

Moreover, as ID information, as shown in FIG. 3B, information which are not encrypted are also prepared in addition to information encrypted by the contents key Kc1. By encrypting ID information, it is possible to prevent that unauthorized (illegal) association between the sublicense and the main license is performed by bad-will person. Further, in the case where encryption is not implemented to the ID information, the receiver 15 which has acquired the sublicense can perform retrieval, etc. of corresponding main license (channel) without decoding ID information.

The main license and the sublicense which include such respective information are offered to users respectively via different paths.

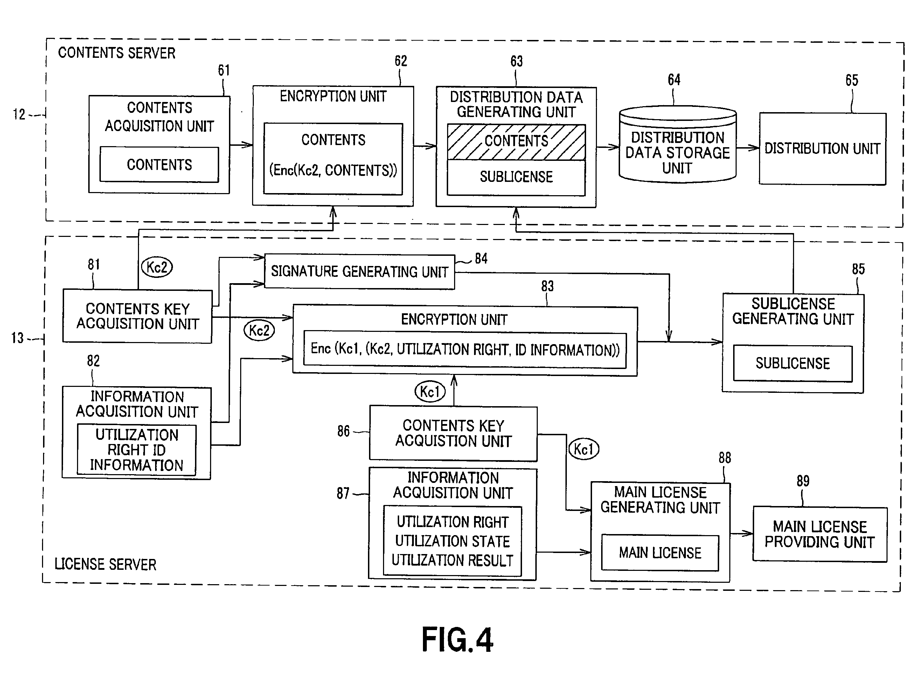

FIG. 4 is a block diagram showing a functional configuration example of the contents server 12 and the license server 13 which are shown in FIG. 1.

A contents acquisition unit 61 of the contents server 12 serves to acquire various contents, e.g., cinema contents, drama contents and/or music contents, etc. through recording medium loaded at the contents server 12 or Internet 11. The contents acquisition unit 61 outputs acquired contents to an encryption unit 62.

The encryption unit 62 serves to encrypt contents delivered from the contents acquisition unit 61 by using contents key Kc2 delivered through the private line 14 or the Internet 11 from a contents key acquisition unit 81 of the license server 13 to output the data thus obtained (Enc (Kc2, contents)) to a distribution data generating unit 63. In FIG. 4, "Enc (Kc2, contents)" indicates that "contents" are encrypted by "contents key Kc2".

A distribution data generating unit 63 serves to add sublicense delivered from a sublicense generating unit 85 of the license server 13 to data (Enc (Kc2, contents)) delivered from the encryption unit 62 to generate distribution data. As described above, in the sublicense, there is included utilization right which prescribes utilization condition of contents to which the sublicense is to be added (FIG. 3). Distribution data generated by the distribution data generating unit 63 is stored into distribution data storage unit 64. In FIG. 4, slanting lines attached to contents encompassed by frame indicate that encryption is implemented to contents.

A distribution unit 65 reads out distribution data stored in the distribution data storage unit 64 in accordance with request from the receiver 15 to distribute, through the Internet 11, the distribution data which has been read out.

The contents key acquisition unit 81 of the license server 13 generates contents key Kc2 by itself, for example, to acquire the contents key Kc2 to output the contents key Kc2 thus acquired to an encryption unit 83 and an encryption unit 62 of the contents server 12.

The information acquisition unit 82 serves to acquire utilization right to be included into the sublicense and ID information of corresponding main license on the basis of information which has been inputted by manager of the license server 13 as utilization condition to be set at contents, for example. The information acquisition unit 82 outputs, to the encryption unit 83, the utilization right and the ID information which have been acquired.

The encryption unit 83 serves to encrypt, by using contents key Kc1 delivered from the contents key acquisition unit 86, the contents key Kc2 delivered from the contents key acquisition unit 81, and the utilization right and the ID information which are delivered from the information acquisition unit 82 to offer, to the sublicense generating unit 85, an output obtained by synthesizing the data thus obtained (Enc (Kc1, (Kc2, utilization right, ID information))) with output of the signature generating unit 84.

The signature generating unit 84 serves to generate electronic signature by using secret-key prepared in advance to outpit, to the siblicense generating unit 85, the electronic signature thus generated and data which has been delivered from the encryption unit 83.

The sublicense generating unit 85 serves to add the electronic signature which has been delivered from the signature generating unit 84 to data encrypted by the encryption unit 83 (Enc, (Kc2, utilization right, ID information))) to generate sublicense shown in FIG. 3B. The sublicense generating unit 85 outputs the sublicense thus generated to distribution data generating unit 63 through the private line 14 or the Internet 11.

A contents key acquisition unit 86 serves to acquire contents key Kc1 to output the contents key Kc1 thus acquired to the encryption unit 83 and a main license generating unit 88.

An information acquisition unit 87 is operative, on the basis of information which has been inputted by, e.g., manager of the license server 13, to acquire utilization right to be included into the main license, and to acquire information for performing management of utilization state and utilization result of contents by user. For example, in the case where user joins subscription service to contract with viewing of cinema channel among plural channels prepared, utilization right for permitting viewing of that cinema channel is acquired by the information acquisition unit 87. Respective information of the utilization right, the utilization state and the utilization result which have been acquired by the information acquisition unit 87 are outputted to a main license generating unit 88.

The main license generating unit 88 genertaes main license shown in FIG. 3A on the basis of respective information of contents key Kc1 delivered from the contents key acquisition unit 86, and utilization right, utilization state and utilization result which are delivered from the information acquisition unit 87. The main license thus generated is outputted to a main license providing unit 89.

The main license providing unit 89 offers the main license which has been generated by the main license generating unit 88 to receiver 15 of user who makes contract in connection with the fact that contents are utilized by utilizing that main license. For example, the main license providing unit 89 serves to encrypt the main license by encryption key by mutual authentication and key exchange, which is based on asymmetric key encryption technology prescribed by ISO-9798-3 to offer the main license thus encrypted to receivers 15.

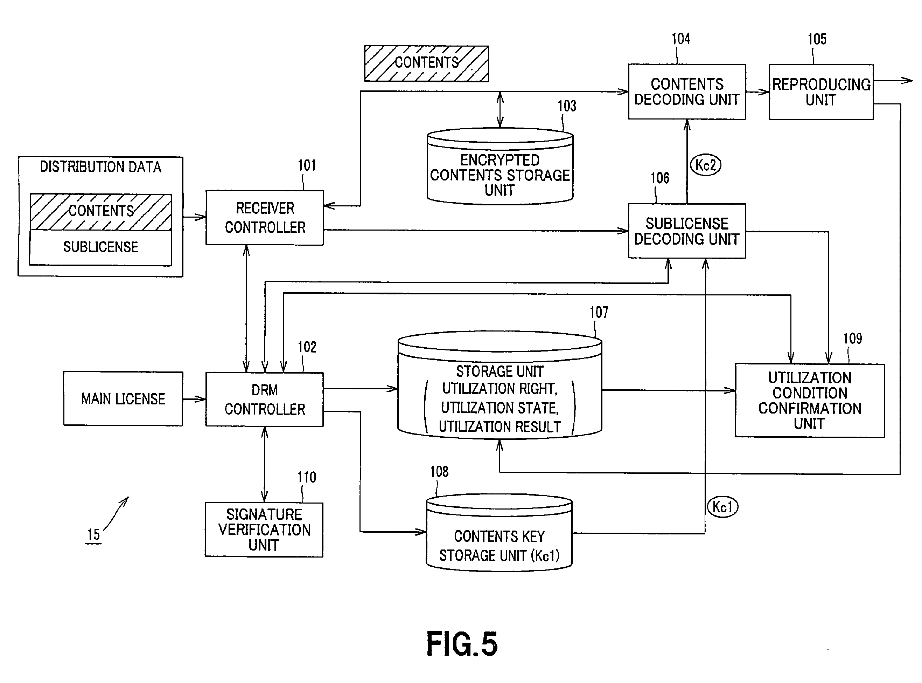

FIG. 5 is a block diagram showing a functional configuration example of the receiver 15.

For example, when reproduction of certain contents is instructed from user, a receiver controller 101 makes a request to the contents server 12 for transmission of contents to receive distribution data which has been distributed in accordance with request. The receiver controller 101 outputs contents included in the distribution data to an encrypted contents storage unit 103 to output sublicense to a DRM (Digital Rights Management) controller 102. It is to be noted that contents outputted to the encrypted contents storage unit 103 are contents in the state where encryption has been implemented by contents key Kc2, and a portion of sublicense outputted to the DRM controller 102 is sublicense in the state where encryption has been implemented by the contents key Kc1.

It should be noted that down-load of distribution data (contents) by the receiver controller 101 may be automatically started at a predetermined timing such as before or after contract of channel is completed and payment of that charge is completed. Moreover, in the case of the so-called push-type service such that the contents server 12 voluntarily provides contents in harmony with taste of user, the receiver controller 101 serves to acquire distribution data provided by the push-type.

The DRM controller 102 decodes the main license transmitted from the license server 3 in the encrypted state by using encryption key by mutual authentication and key exchange, which is based on asymmetric key encryption technology prescribed by, e.g., ISO-9798-3 to acquire the main license thus decoded. Processing for acquiring the main license are performed one by one every respective channels, for example.

Moreover, the DRM controller 102 serves to perform verification, etc. of justification of electronic signature included in the main license thereafter to store utilization right, utilization state and utilization result which are included in the main license into storage unit 107, and to store contents key Kc1 into contents key storage unit 108. The utilization state and the utilization result which are stored in the storage unit 107 are updated every time contents are reproduced by a reproducing unit 105.

Further, when reproduction of contents is instructed, the DRM controller 102 transmits the sublicense which has been received from the receiver controller 101 to a sublicense decoding unit 106. The processing by the receiver controller 101 and the DRM controller 102 will be described later in detail with reference to the flowchart.

A contents decoding unit 104 serves to read out, from the encrypted contents storage unit 103, contents in the encrypted state to decode, by using contents key Kc2 delivered from the sublicense decoding unit 106, the contents which have been read out. In the case where it is confirmed from the utilization condition prescribed by the main license and the sublicense that reproduction of the contents is permitted, the contents key Kc2 is delivered from the sublicense decoding unit 106. The contents which have been decoded by the contents decoding unit 104 are outputted to the reproducing unit 105.

The reproducing unit 105 implements processing such as decode operation or digital/analog conversion, etc. to the contents which have been decoded by the contents decoding unit 104 to output an image to display unit, and to output sound to speaker.

A sublicense decoding unit 106 serves to decode, by using contents key Kc1 stored in a contents key storage unit 108, a portion of sublicense delivered from the DRM controller 102. The sublicense decoding unit 106 outputs utilization right included in the sublicense into a utilization condition confirmation unit 109, and outputs contents key Kc2 to the contents decoding unit 104.

A utilization condition confirmation unit 109 serves to read out utilization right of the main license from the storage unit 107 in accordance with the fact that confirmation as to whether or not reproduction of contents is permitted is instructed from the DRM controller 102. Moreover, the utilization condition confirmation unit 109 serves to acquire utilization right of sublicense which has been decoded by the sublicense decoding unit 106 to confirm, on the basis of utilization right of the acquired sublicense and utilization right of the main license, whether or not it is permitted that contents are utilized. The utilization condition confirmation unit 109 notifies, to the DRM controller 102, whether or not it is permitted that contents are utilized.

A signature verification unit 110 serves to perform verification of signatures of the main license and the sublicense which have been received from the DRM controller 102. The sublicense is decoded by using contents key Kc1 at the sublicense decoding unit 106. Thus, utilization right, ID information and contents key Kc2 within the sublicense are taken out. The decoded information and signatures which have been calculated on the basis of these information are sent from the DRM controller 102 to the signature verification unit 110. The signature verification unit 110 serves to perform verification of signatures to notify verification result to the DRM controller 102.

Then, the operations of the contents server 12, the license server 13 and the receiver 15 which have been constituted as described above will be explained with reference to the flowchart.

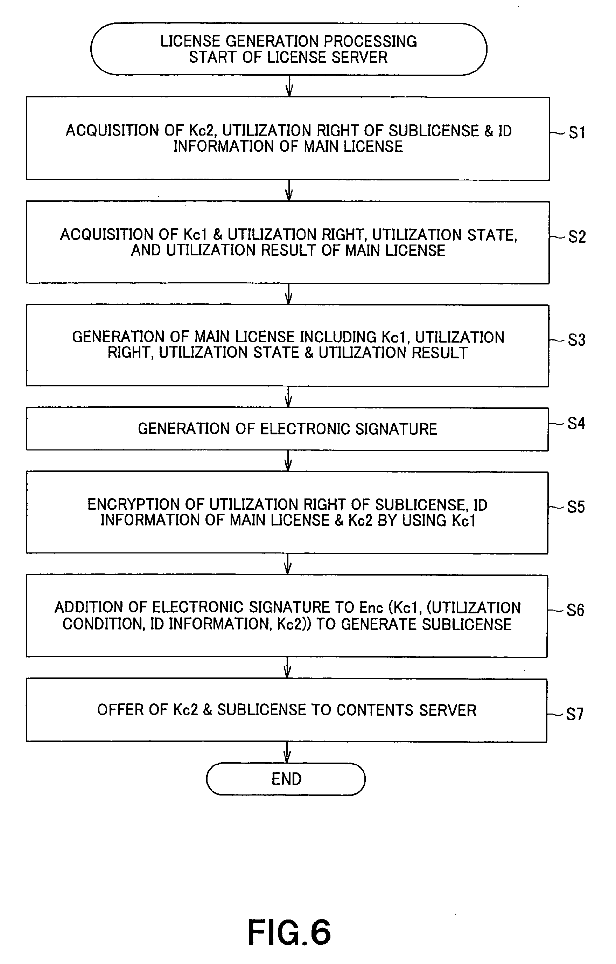

Initially, the license generation processing of the license server 13 for generating main license and sublicense will be explained with reference to the flowchart of FIG. 6.

At step S1, the contents key acquisition unit 81 serves to acquire contents key Kc2, and the information acquisition unit 82 serves to acquire utilization right of the sublicense and ID information of the main license to which sublicense generated correspond. The utilization right of the sublicense is acquired by the information acquisition unit 82 on the basis of information which has been inputted by manager of the license server 13, for example. The contents key Kc2 is outputted from the contents key acquisition unit 81 to the encryption unit 83, and the utilization right and the ID information are outputted from the information acquisition unit 82 to the encryption unit 83.

At step S2, the contents key acquisition unit 86 serves to acquire contents key Kc1, and the information acquisition unit 87 serves to acquire information for performing management of utilization right to be included into the main license, and utilization state and utilization result of contents by user. The utilization right included in the main license is acquired from information which has been inputted by manager of the license server 13 in accordance with, e.g., contract with user similarly to the utilization right included in the sublicense. The contents key Kc1 is outputted from the contents key acquisition unit 86 to the encryption unit 83 and the main license generating unit 88, and the utilization right, the utilization state and the utilization result are outputted from the information acquisition unit 87 to the main license generating unit 88.

At step S3, the main license generating unit 88 generates main license on the basis of respective information of the contents key Kc1 delivered from the contents key acquisition unit 86 and the utilization right, the utilization state and the utilization result which are delivered from the information acquisition unit 87. It is to be noted that electronic signature which has been generated by the main license generating unit 88 is also included. The main license thus generated is outputted to the main license providing unit 89, and is offered to the receiver 15 at a predetermined timing.

At step S4, the signature generating unit 84 generates, by using secret-key, electronic signatures of the contents key Kc2, the utilization right and the ID information which are delivered from the contents key acquisition unit 81 and the information acquisition unit 82.

At step S5, the encryption unit 83 serves to encrypt, by using contents key Kc1 delivered from the contents key acquisition unit 86, the contents key Kc2 delivered from the contents key acquisition unit 81, and the utilization right and the ID information which are delivered from the information acquisition unit 82. The encrypted data thus obtained (Enc (Kc1, (Kc2, utilization right, ID information))) are outputted to the sublicense generating unit 85 in the state combined with the electronic signatures which have been obtained by processing at the step S4.

At step S6, the sublicense generating unit 85 serves to add electronic signatures which have been delivered from the signature generating unit 84 to data encrypted by the encryption unit 83 (Enc (Kc1, (Kc2, utilization right, ID information))) to generate sublicense.

At step S7, the contents key acquisition unit 81 transmits the contents key Kc2 to the encryption unit 62 through the private line 14 or the Internet 11. Moreover, the sublicense generating unit 85 transmits the sublicense to the distribution data generating unit 63 of the contents server 12 through the private line 14 or the Internet 11.

By the above-mentioned processing, main license which prescribes the utilization condition of the entirety of contents distributed via a channel that user contracts and sublicense which prescribes utilization condition of respective contents are generated by the license server 13.

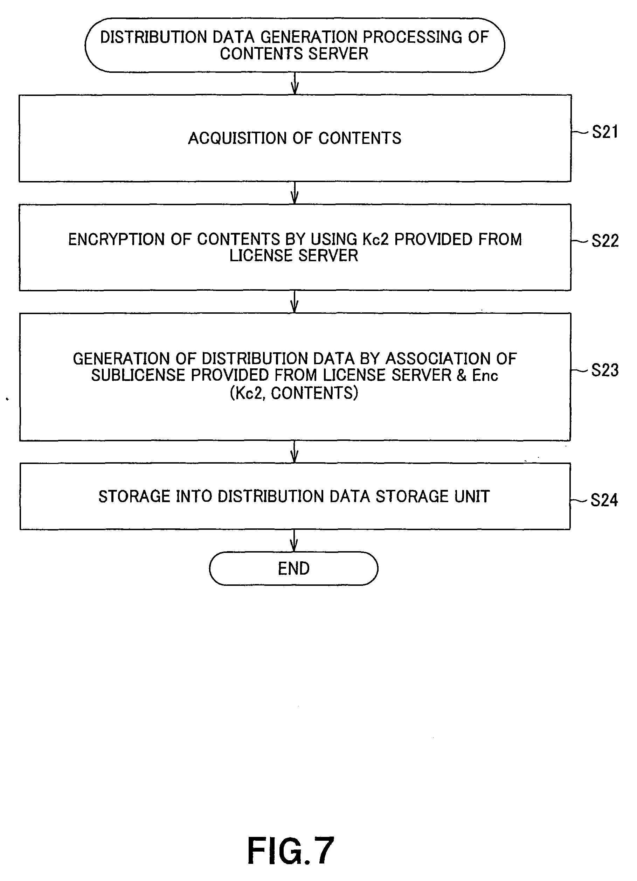

Then, the distribution data generation processing of the contents server 12 will be explained with reference to the flowchart of FIG. 7.

At step S21, the contents acquisition unit 61 serves to acquire contents to output the contents thus acquired to the encryption unit 62. For example, contents recorded on a recording medium loaded at the contents server 12, or contents which have been transmitted through the Internet 11 are acquired by the contents acquisition unit 61.

At step S22, the encryption unit 62 serves to encrypt contents delivered from the contents acquisition unit 61 by using contents key Kc2 delivered from the contents key acquisition unit 81 of the license server 13. The data obtained by implementing encryption (Enc (Kc2, contents)) is outputted to the distribution data generating unit 63.

At step S23, the distribution data generating unit 63 serves to add sublicense delivered from the contents key acquisition unit 86 of the license server 13 to data (Enc (Kc2, (contents)) delivered from the encryption unit 62 to generate distribution data.

The distribution data which has been generated by the distribution data generating unit 63 is outputted to the distribution data storage unit 64. At step S24, the distribution data thus outputted is stored thereinto.

The distribution data which has been generated by the above-mentioned processing is stored into the distribution data storage unit 64 in distributable state in accordance with request from user (receiver 15).

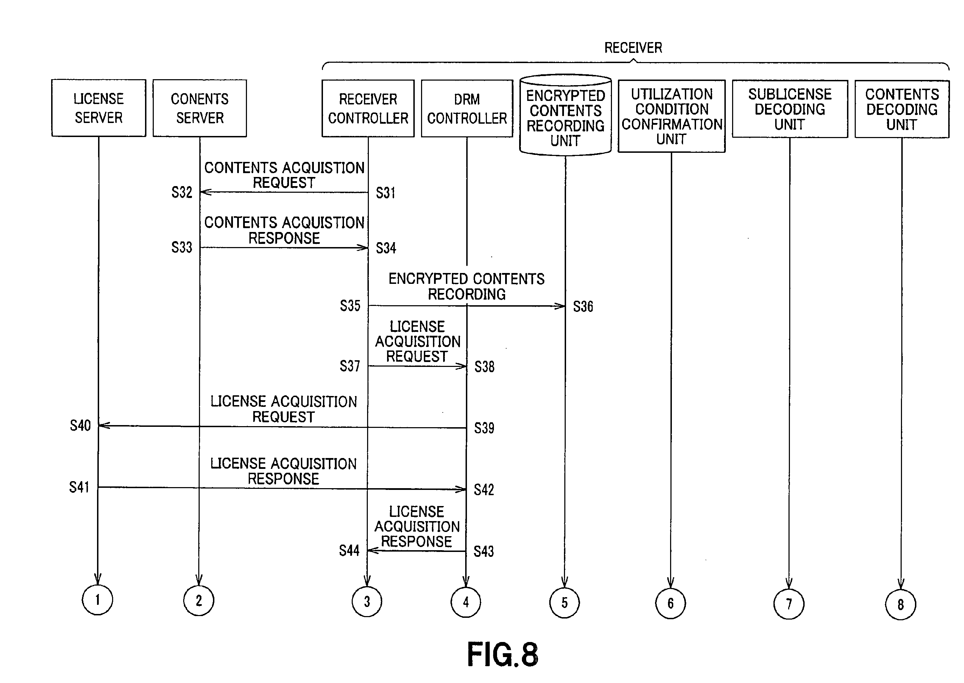

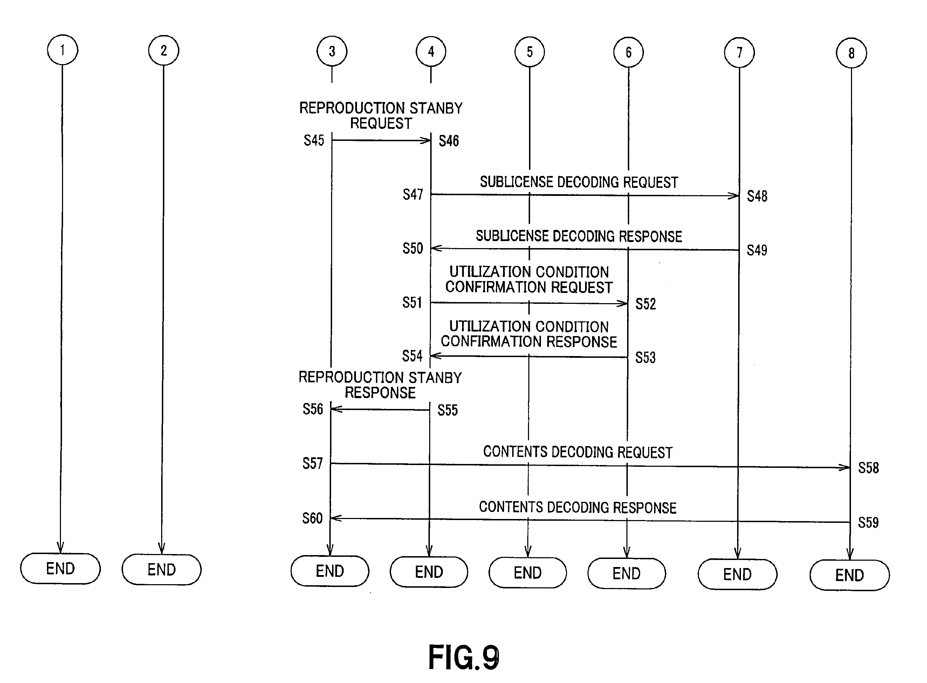

Then, processing performed among the contents server 12, the license server 13 and the receiver 15 in the case where contents are reproduced at the receiver 15 will be explained with reference to the flowchart of FIGS. 8 and 9.

When it is instructed from user that contents distributed via a contracted channel are acquired, the receiver controller 101 of the receiver 15 provides an access to the contents server 12 through the Internet, at step S31, to request acquisition of contents, i.e., down-load of distribution data.

At step S32, the distribution unit 65 of the contents server 12 receives request from the receiver 15. Thus, processing by the distribution unit 65 proceeds to step S33. At the step S33, the distribution unit 65 serves to read out, from the distribution data storage unit 64, distribution data including requested contents to transmit it to the receiver 15 as contents acquisition response.

At step S34, the receiver controller 101 of the receiver 15 receives distribution data transmitted from the contents server 12. Thus, processing by the receiver controller 101 proceeds to step S35. The contents included in the distribution data are stored into the encrypted contents storage unit 103. The contents stored in the encrypted contents storage unit 103 at step S36 are contents in the state encrypted by the contents key Kc2.

At step S37, the receiver controller 101 makes a request to the DRM controller 102 for acquisition of main license. It is to be noted that this request is made only in the case where main license of channel that user contracts is not acquired by the receiver 15. In the case where such request is already acquired (in the case where utilization right, etc. of main license is stored in the storage unit 107, and contents key Kc1 is stored in the contents key storage unit 108), this request is not made.

At step S38, the DRM controller 102 receives request from the receiver controller 101. Thus, processing by the DRM controller 102 proceeds to step S39. At the step S39, the DRM controller 102 provides an access to the license server 13 through the Internet 11 to make a request for acquisition (offer) of main license.

At step S40, the main license providing unit 89 of the license server 13 receives request from the DRM controller 102. Thus, processing by the main license providing unit 89 proceeds to step S41. At this time, processing which have been explained with reference to FIG. 6 are performed by respective units of the license server 13. Thus, main license is generated.

At step S41, the main license providing unit 89 serves to encrypt main license of channel that user of the receiver 15 contracts by using encryption key by mutual authentication and key exchange, which is based on asymmetric key encryption technology prescribed by, e.g., ISO-9798-3 to transmit the main license thus encrypted through the Internet 11 as license acquisition response. Thus, it is possible to prevent that the main license is leaked to the third party or is falsified.

At step S42, the DRM controller 102 receives the main license which has been transmitted from the license server 13. When the DRM controller 102 receives the main license, it stores information such as utilization right, etc. included in the main license into the storage unit 107, and stores the contents key Kc1 into the contents key storage unit 108.

At step S43, the DRM controller 102 notifies, to the receiver controller 101, as license acquisition response, that the main license has been acquired.

When reproduction of the acquired contents is instructed by user, the receiver controller 101 makes a request to the DRM controller 102 for standby of reproduction of the contents.

Processing by the DRM controller 102 which has received that request at step S46 proceeds to step S47. Thus, the DRM controller 102 outputs, to the sublicense decoding unit 106, sublicense which prescribes utilization condition of contents of which reproduction has been instructed to request decoding operation thereof.

At step S48, the sublicense decoding unit 106 receives request from the DRM controller 102 to decode the sublicense by using the contents key Kc1 stored in the contents key storage unit 108. When decoding operation of the sublicense is completed, processing by the sublicense decoding unit 106 proceeds to step S49 to notify, to the DRM controller 102, as sublicense decoding response, that decoding operation has been completed. The utilization right which has been decoded by the sublicense decoding unit 106 (the utilization right of the sublicense corresponding to the contents of which reproduction has been instructed) is outputted to the utilization condition confirmation unit 109. Moreover, the contents key Kc2 included in the sublicense is outputted to the contents decoding unit 104.

At step S50, the DRM controller 102 receives response from the sublicense decoding unit 106. Thus, processing by the DRM controller 102 proceeds to step S51 to make a request to the utilization condition confirmation unit 109 for confirmation of the utilization condition.

The utilization condition confirmation unit 109 which has received the request of confirmation of the utilization condition at step S52 reads out utilization right of the main license stored in the storage unit 107 to confirm the substances (subjects) of the utilization right of the main license which has been read out and the utilization right of the sublicense delivered from the sublicense decoding unit 106. In the case where the utilization condition confirmation unit 109 confirms on the basis of the utilization right of the main license and the utilization right of the sublicense that the utilization condition is satisfied, it notifies, to the DRM controller 102**,** as confirmation response, at step S33, that reproduction of contents is permitted. In the case where the utilization condition is not satisfied, the utilization condition confirmation unit 109 notifies, to the DRM controller 102, that reproduction of contents is not permitted.

Here, the utilization condition that the utilization condition confirmation unit 109 confirms will be explained.

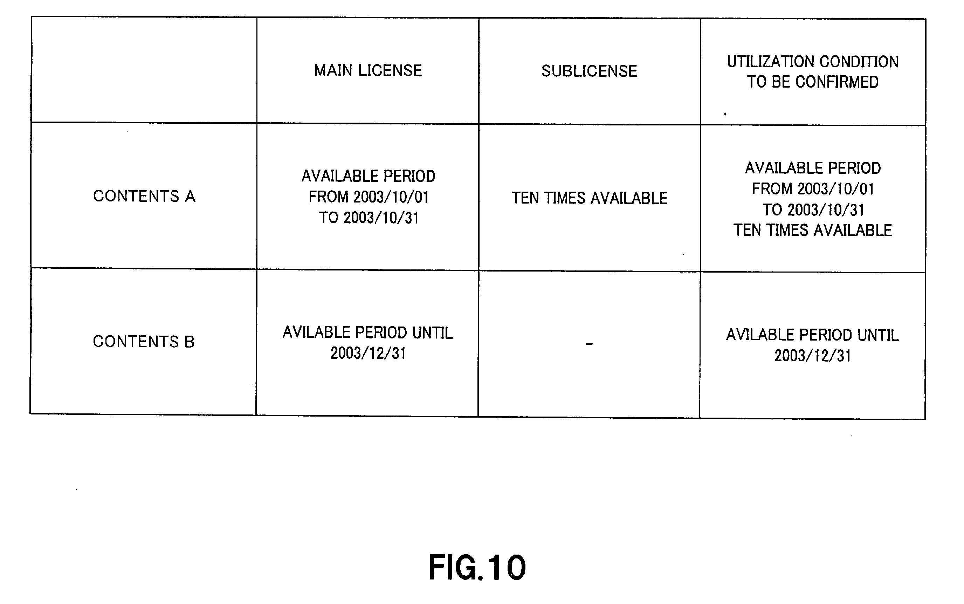

FIG. 10 is a view showing a practical example of utilization right (utilization condition).

In the example of FIG. 10, as the utilization condition of channel through which contents A are distributed, it is prescribed by the main license that the available period is from October 1, 2003 (2003/10/01) to October 31, 2003 (2003/10/31). Moreover, as the utilization condition of the contents A, it is prescribed by the sublicense that utilization can be made ten times.

Accordingly, in this case, the utilization condition confirmation unit 109 confirms whether or not date when reproduction of contents A is instructed is within time period from October 1, 2003 to October 31, 2003, and contents A are utilized ten times. In the case where date when reproduction of contents A is instructed is within time period from October 1, 2003 to October 31, 2003, and contents A are utilized only ten times, it is judged that the contents A can be utilized. Moreover, in the case where date when reproduction of the contents A is designated is within time period from October 1, 2003 to October 31, 2003, or in the case where contents A are already utilized ten times, it is judged that the contents A cannot be utilized.

As the No. of utilizations of contents A, utilization state and/or utilization result which are stored in the storage unit 107 are referred.

Further, in the example of FIG. 10, as the utilization condition of channel through which contents B are distributed, it is prescribed by the main license that available period is up to December 31, 2003 (2003/12/31). Further, utilization condition of the contents B is not prescribed. If corresponding utilization condition is within the scope of utilization condition prescribed by the main license, it is assumed that contents B can be freely utilized. Accordingly, in this case, the utilization condition confirmation unit 109 confirms whether or not date when reproduction of the contents B is instructed is within time period up to December 31, 2003. Here, time referred in performing confirmation is set to accurate time which is acquired from a server which performs management of time via a safety path such that unauthorized (illegal) falsification, etc. may be performed by the third party, and is caused to undergo management by secure module, e.g., the inside of the DRM controller 102.

By using the main license and the sublicense in this way, it is possible to prescribe the utilization condition of the entirety of contents distributed via one channel and utilization conditions of respective contents. Accordingly, even in the case of subscription service to be contracted on channel basis, it is possible to set different conditions such as utilization period and/or No. of utilizations to respective contents distributed via the one channel.

Returning to the explanation of FIG. 9, in the case where the DRM controller 102 which has received response from the utilization condition confirmation unit 109 at step S54 has judged on the basis of confirmation result included in that response that reproduction of contents is permitted, processing by the DMA controller 102 proceeds to step S55 to notify, to the receiver controller 101, as reproduction standby response of contents, that reproduction of contents is started.

Processing by the receiver controller 101 which has received notification from the DRM controller 102 at step S56 proceeds to step S57. Thus, the receiver controller 101 makes a request to the contents decoding unit 104 for decode operation of contents.

The contents decoding unit 104 receives the request from the receiver controller 101 at step S58 to decode, by using the contents key Kc2 delivered from the sublicense decoding unit 106, contents in which decode operation has been instructed (contents in encrypted state which is stored in the encrypted contents storage unit 103).

The contents which have been decoded by the contents decoding unit 104 are outputted to the reproducing unit 105. Thus, the substance (subject) of the contents is outputted from the display unit or speaker. The reproducing unit 105 serves to update, in accordance with output of the contents, utilization state and/or utilization result which are stored in the storage unit 107.

When reproduction of contents by the reproducing unit 105 is completed, the contents decoding unit 104 notifies, to the receiver controller 101, as contents decode response, at step S59, that decode (reproduction) of contents has been completed.

The above-mentioned processing are executed by the contents server 12, the license server 13 and the receiver 15. Thus, contents are offered to user.

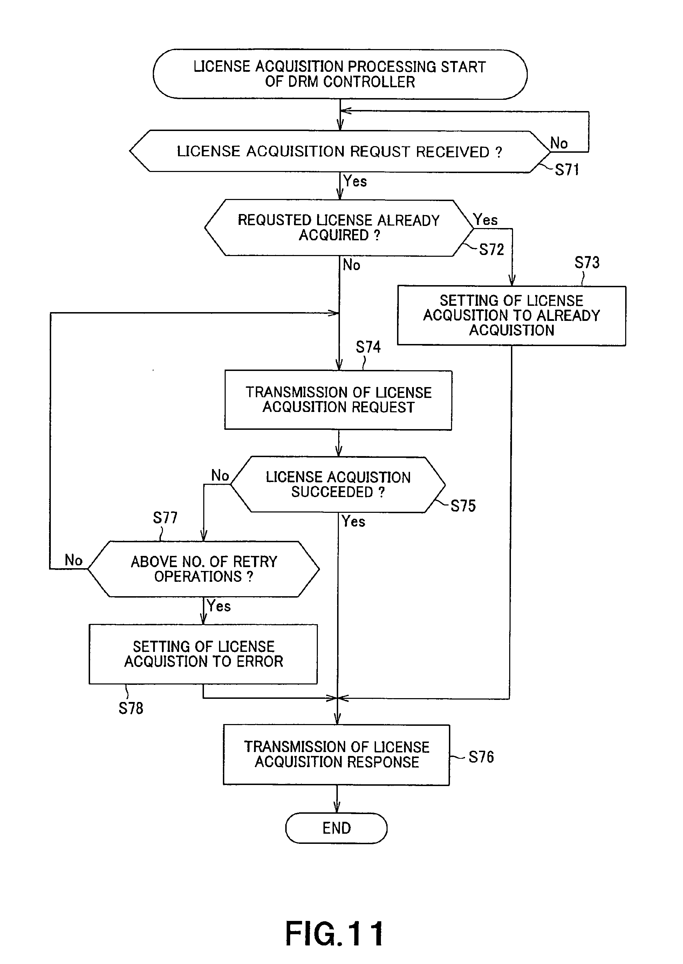

Then, the license acquisition processing of the DRM controller 102 which acquires main license from the license server 13 will be explained with reference to the flowchart of FIG. 11.

At step S71, the DRM controller 102 judges as to whether or not license acquisition request for making a request to the license server 13 for acquisition of main license therefrom is transmitted from the receiver controller 101 to stand by until it is judged that the license acquisition request has been transmitted. As explained with reference to FIG. 8, after contents are stored into the encrypted contents storage unit 103, license acquisition request is transmitted from the receiver controller 101 (step S37 of FIG. 8)

In the case where it is judged at the step S71 that the license acquisition request has been transmitted, processing by the DRM controller 102 proceeds to step S72. The DRM controller 102 judges by making reference to, e.g., flags indicating acquisition states of main licenses of respective channels, or information stored in the storage unit 107 or the contents key storage unit 108 as to whether or not the requested main license has been already acquired.

In the case where it is judged at the step S72 that the main license has been acquired, processing by the DRM controller 102 proceeds to step S73. Thus, the DRM controller 102 sets, as acquired flag, the main license of channel requested from the receiver controller 101 to skip processing of steps S74 and S75 which will be described later.

On the other hand, in the case where it is judged at the step S72 that the main license is not acquired, processing by the DRM controller 102 proceeds to step S74. Thus, the DRM controller 102 transmits license acquisition request to the license server 13 to request transmission of the main license. At this time, information such as channel No. indicating channel of main license to be requested, etc. is also transmitted from the DRM controller 102 to the license server 13.

At step S75, the DRM controller 102 judges as to whether or not license is acquired. In the case where the DRM controller 102 has judged at the step S75 that it is succeeded that the main license is acquired, or in the case where the fact that main license has been already acquired at the step S73 is set at flag, processing by the DRM controller 102 proceeds to step S76 to transmit, to the receiver controller 101, the license acquisition response which notifies that the main license has been acquired to complete processing.

On the other hand, in the case where it is judged at the step S75 that it is not succeeded that license is acquired, processing by the DRM controller 102 proceeds to step S77. Thus, the DRM controller 102 judges whether or not the number of requests of license performed with respect to the license server 13 is above the number of retry operations set in advance.

In the case where it is judged at step S77 that the number of requests is not above the No. of retry operations, processing by the DRM controller 102 returns to the step S74 to repeatedly request transmission of the main license. Moreover, in the case where it is judged at the step S77 that the number of requests of the license is above the number of retry operations, processing by the DRM controller 102 proceeds to step S78 to set, at the flag, the fact that main license of the required channel fails to be acquired (error is set). At this time, the DRM controller 102 transmits, to the receiver controller 101, at step S76, license acquisition response which notifies that the main license has failed to be acquired to complete processing.

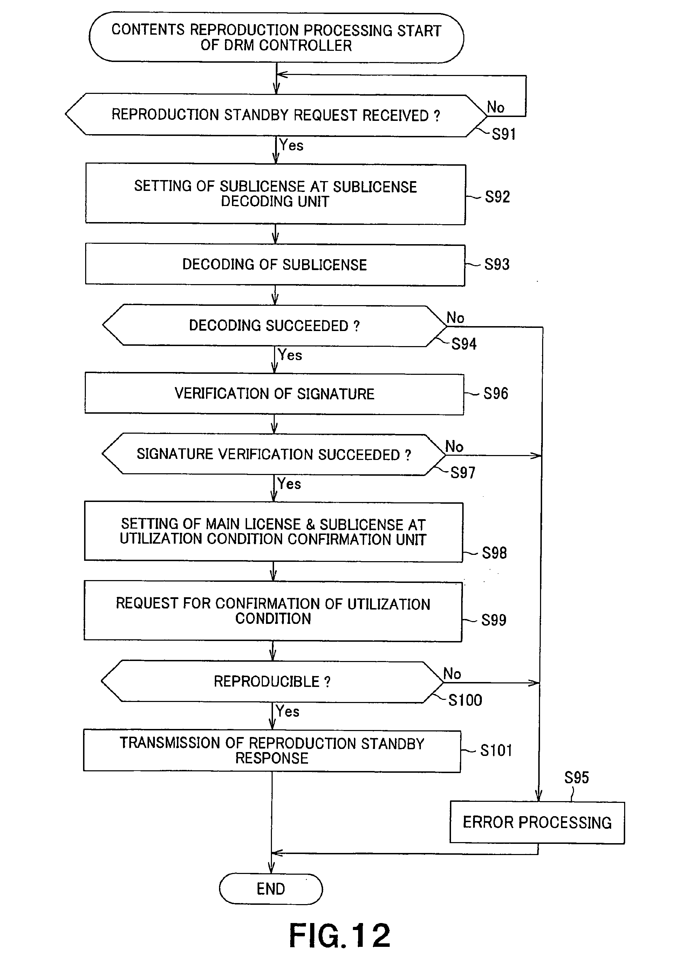

Then, the contents reproduction processing of the DRM controller 102 for controlling reproduction of contents will be explained with reference to the flowchart of FIG. 12. In FIG. 12, contents for which reproduction is required are already stored into the encrypted contents storage unit 103, and main license of channel through which those contents are distributed are assumed to be acquired in advance.

At step S91, the DRM controller 102 judges as to whether or not reproduction standby request is transmitted from the receiver controller 101. Until it is judged that the reproduction standby request is transmitted, the DRM controller 102 stands by. As explained with reference to FIGS. 8 and 9, reproduction standby request is transmitted from the receiver controller 101 at the timing when reproduction of contents is instructed from user (step S45 of FIG. 9).

In the case where the DRM controller 102 has judged at the step S91 that the reproduction standby request has been transmitted, processing by the DRM controller 102 proceeds to step S92.

At the step S92, the DRM controller 102 sets (provides), at the sublicense decoding unit 106, sublicense corresponding to the contents of which reproduction has been requested. Thus, processing by the DRM controller 102 proceeds to step S93 to transmit sublicense decode request (step S47 of FIG. 9) to perform decode operation thereof. In accordance with this request, the sublicense decoding unit 106 reads out the contents key Kc1 from the contents key storage unit 108 to decode the sublicense by using the contents key Kc1. Whether or not decode operation is succeeded is notified by sublicense decode response (step S49 of FIG. 9) transmitted from the sublicense decoding unit 106.

At step S94, the DMA controller 102 judges on the basis of sublicense decode response transmitted from the sublicense decoding unit 106 whether or not decode operation of the sublicense is succeeded. In the case where it is judged that decode operation is not succeeded (failed), processing by the DRM controller 102 proceeds to step S95 to perform error processing to complete processing.

On the other hand, at the step S94, in the case where the DRM controller 102 has judged that decode operation of the sublicense is succeeded at the sublicense decoding unit 106, processing by the DRM controller 102 proceeds to step S96.

At the step S96, the signature verification unit 110 serves to perform verification of signatures of the main license and the sublicense. Namely, utilization right, ID information and contents key Kc2 which are acquired as the result of the fact that the sublicense is decoded, by using the contents key Kc1, by the sublicense decoding unit 106, and signatures which have been calculated on the basis of these information are outputted from the DRM controller 102 to the signature verification unit 110. The signature verification unit 110 notifies the verification result of the signature to the DRM controller 102.

At step S97, the DRM controller 102 judges on the basis of the notification from the signature verification unit 110 whether or not verification of signature is succeeded. In the case where it is judged that such verification is failed, processing by the DRM controller 102 proceeds to step S95 to perform error processing. On the other hand, in the case where the DRM controller 102 has judged at the step S97 that verification of signature has been succeeded, processing by the DRM controller 102 proceeds to step S98.

At step S98, the DRM controller 102 sets utilization right of main license from the storage unit 107 and utilization right of sublicense from the sublicense decoding unit 106 at the utilization condition confirmation unit 109 (outputs them to utilization condition confirmation unit 109).

At step S99, the DRM controller 102 transmits utilization condition confirmation request (step S51 of FIG. 9) to request the utilization condition confirmation unit 109 for confirmation of the utilization condition. At the utilization condition confirmation unit 109, whether or not reproduction of contents is permitted is judged. The judgment result thus obtained is transmitted as utilization condition confirmation response (step S53 of FIG. 9).

It is to be noted that utilization rights of the main license and the sublicense are held by utilization condition confirmation unit 109 also during reproduction of contents, and confirmation of the utilization condition is performed on the real time basis until completion of reproduction of contents. For example, when it is confirmed by the utilization condition confirmation unit 109 that the utilization is not satisfied even during reproduction, that reproduction is stopped.

At step S100, the DRM controller 102 judges on the basis of utilization condition confirmation response transmitted from the utilization condition confirmation unit 109 whether or not reproduction of contents can be made, i.e., whether or not utilization condition is satisfied. In the case where since utilization condition is not satisfied, the DRM controller 102 has judged that contents cannot be reproduced, processing by the DRM controller 102 proceeds to the step S95 to perform error processing thereafter to complete the processing. At this time, there is performed, because the utilization condition is not satisfied, processing such that picture for notifying, to user, that contents cannot be reproduced is displayed, etc.

On the other hand, in the case where the DRM controller 102 has judged at the step S100 that contents can be reproduced, i.e., in the case where it is confirmed by the utilization condition confirmation unit 109 that utilization condition is satisfied, processing by the DRM controller 102 proceeds to step S101 to transmit, to the receiver controller 101, reproduction standby response (step S55 of FIG. 9) which notifies that reproduction of contents can be made to complete processing. Thereafter, management of reproduction of contents is performed by the receiver controller 101.

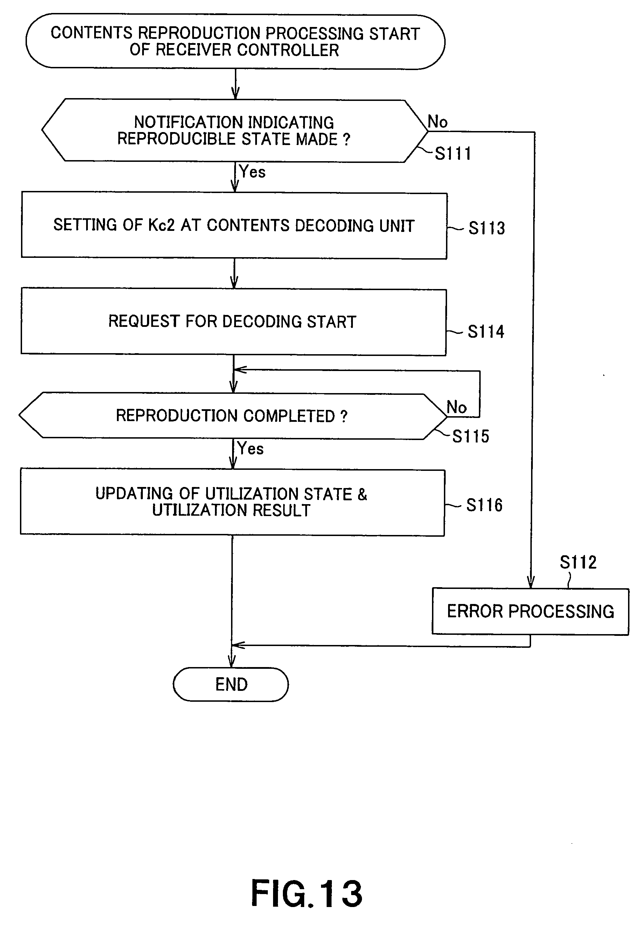

Then, the contents reproduction processing of the receiver controller 101 performed subsequently to the processing of FIG. 12 will be explained with reference to the flowchart of FIG. 13.

At step S111, the receiver controller 101 judges whether or not the fact that reproduction of contents can be made is notified from the DRM controller 102. In the case where it is judged that the fact that reproduction of contents is impossible is notified, processing by the receiver controller 101 proceeds to step S 112 to perform error processing to complete processing.

On the other hand, in the case where the receiver controller 101 has judged at the step S111 that the fact that reproduction of contents can be made is notified from the DRM controller 102, processing by the receiver controller 101 proceeds to step S 113 to control the sublicense decoding unit 106 to set contents key Kc2 obtained when the sublicense is decoded at the contents decoding unit 104.

At step S114, the receiver controller 101 transmits contents decode request to the contents decoding unit 104 (step S57 of FIG. 9) to make a request for start of decode operation of contents by using contents key Kc2 delivered from the sublicense decoding unit 106. At the contents decoding unit 104, decode operation of contents is performed in accordance with request from the DRM controller 102. The contents thus decoded are reproduced by the reproducing unit 105. When reproduction of contents is completed, the fact that decode operation of contents has been completed is notified from the contents decoding unit 104 to the receiver controller 101 by contents decode response (step S59 of FIG. 9).

At step S115, the receiver controller 101 judges as to whether or not reproduction of contents has been completed. Thus, the receiver controller 101 stands by until it is judged that such reproduction has been completed.

In the case where the receiver controller 101 has judged at step S 115 that reproduction of contents has been completed, it updates, by the reproducing unit 105, the utilization state and the utilization result which are stored in the storage unit 107 to complete processing. In this example, both the utilization state of contents within the scope of the utilization condition prescribed by the main license and the utilization state of contents within the scope of the utilization condition prescribed by the main license are associated by one service name (channel name), and are recorded as utilization state of the main license. Also in connection with the utilization result, result in accordance with the utilization condition prescribed by the sublicense is similarly recorded at utilization result within the main license. Thus, it becomes possible to collectively perform, by the main license, management of the utilization state and the utilization result of the subscription service contracted on channel basis.

As stated above, by two licenses of the main license and the sublicense, it is possible to easily prescribe various utilization conditions such that different utilization conditions are set to respective contents distributed via one channel, etc. Namely, contents distribution entrepreneur can provide services of various forms while suitably protecting copyright of contents by two licenses.

It is possible to provide services of various forms such as not only, e.g., service such that after contract every channel is performed, all contents distributed via corresponding channel can be utilized, but also service such that even after contract every channel is performed, limitation of No. of utilizations is set to certain contents distributed via corresponding channel and charge takes place at other contents every time these contents are utilized, etc.

Moreover, also with respect to user, since sublicense is transmitted along with contents, if the receiver 15 is caused to acquire, in adavance, main license, it is possible to rapidly start reproduction of acquired contents. Namely, it is possible to omit such processing to provide access to server from the receiver 15 before reproduction of contents is started to perform authentication (certification) by public-key certificate.

While it has been described above that both management of license and reproduction of contents are performed at the receiver 15, license which permits utilization within the scope of utilization condition prescribed by license that the receiver 15 has may be outputted (exported) from the receiver 15 to other equipment having DRM function so that reproduction of contents is performed at corresponding equipment.

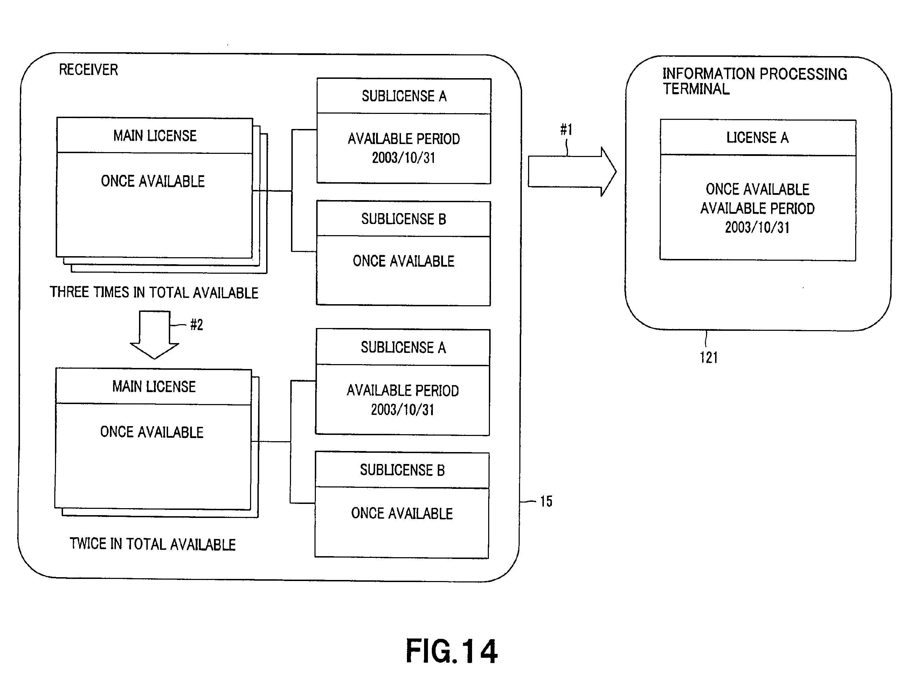

FIG. 14 is a view showing export of license.

In the example of FIG. 14, the receiver 15 has main license which prescribes that contents distributed via a certain channel can be utilized three times in total, sublicense A which prescribes that the available period of contents A distributed via that channel is up to October 31, 2003 (2003/10/31), and sublicense B which prescribes that contents B distributed via the same channel can be utilized only once. The contents A and the contents B are stored in the encrypted contents storage unit 103 of the receiver 15 of FIG. 14 (not shown). In FIG. 14, three main licenses which prescribe that contents can be utilized once are illustrated.

In this state, in the case where license A is generated from, e.g., utilization right which permits utilization of contents corresponding to one time which is a part of the main license and utilization right of the sublicense A (available period 2003/10/31), and the license A is exported to information processing terminal 121 having DRM function as indicated by thick arrow #1, it becomes possible to utilize contents A on the basis of license A at the information processing terminal 121.

Namely, at the information processing terminal 121, contents A can be utilized only once up to October 31, 2003. It is to be noted that contents A may be transmitted from the receiver 15 to the information processing terminal 121 along with the license A, or the information processing terminal 121 itself may acquire the contents A from the contents server 12.

On the other hand, at the receiver 15 which has exported license, main license which prescribes that contents (contents A, B) can be utilized three times in total is updated into the license which prescribes that contents can be utilized twice in total as indicated by thick arrow #2. Namely, the No. of utilizations by the main license is updated into the No. of utilizations subtracted by the number of times (once) when license is exported to the information processing terminal 121. In this case, the sublicense A and the sublicense B are not changed.

As stated above, other equipment may be permitted to utilize contents within the scope of the utilization condition prescribed by the license that the receiver 15 has acquired. Thus, utilization of contents having relatively high degree of freedom can be made while realizing protection of copyright of contents.

In the case of the license in which the remaining utilization condition is changed in accordance with the fact that user utilizes contents such as No. of times which can be utilized (available No. of times) or accumulated time which can be utilized (available accumulated time), etc. as described above (in the case of the license in which the No. of utilizations is decreased every export, or the license in which utilizable (available) accumulated time is decreased every utilization at the export destination), if there is employed an approach in which there is no difference between license of the export source and license of the export destination, export of license is permitted so that there is a few possibility that contents distribution entrepreneur may suffer disadvantage. However, in the case of the license which prescribes time period, e.g., "utilizable (available) until October 31, 2003", when plural licenses in which utilization of contents are permitted within corresponding time period are issued from the receiver 15, there is the possibility that contents distribution entrepreneur may suffer disadvantage. For this reason, in this case, the number of exportable times may be limited to the number of times that manager (issuer) of license permits.

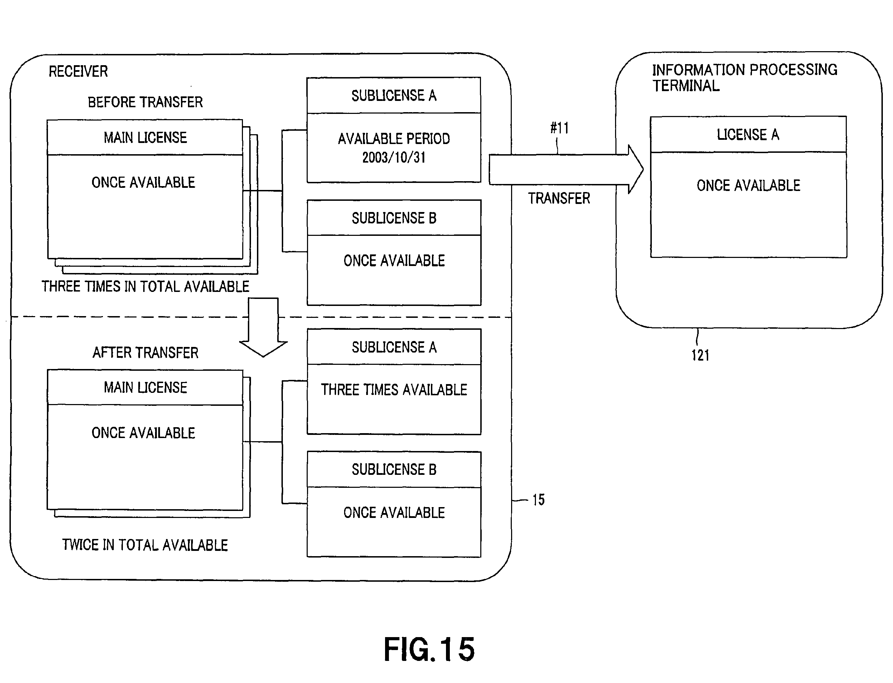

FIG. 15 is a view showing transfer of license. Here, the term "transfer" indicates that the entirety of the license which prescribes the utilization condition of certain contents is outputted to other equipment.

In the example of FIG. 15, the receiver 15 has the main license which prescribes that contents distributed via a certain channel can be utilized only three times, the sublicense A which prescribes that contents A distributed via that channel can be utilized up to October 31, 2003 (2003/10/31), and the sublicense B which prescribes that contents B distributed via the same channel can be utilized only once.

In this state, in the case where license A is generated from, e.g., utilization right of the main license and the sublicense A itself, and the license A is transferred to the information processing terminal 121 as indicated by thick arrow #21, it becomes possible to utilize contents A on the basis of the license A at the information processing terminal 121. Namely, at the information processing terminal 121, contents A can be utilized three times in total until October 31, 2003.

In this state, one time of utilization right of main license among three times thereof is transferred to the information processing terminal 121 as indicated by thick arrow #1. The information processing terminal 121 serves to acquire contents A and sublicense A from the contents server 12, etc., thus making it possible to utilize contents A. Moreover, also in the case where there is a necessity of utilizing contents B, similar technique is used to have ability to utilize the contents B.

On the other hand, at the receiver 15 in which the license has been transferred, the utilization right of the main license which has been transferred is deleted once, and update is made such that the number of utilization rights becomes equal to two. In this case, even after the license is transferred, there is no change in the sublicense A and the sublicense B.

Even if there is employed, as stated above, an approach such that transfer of license is permitted from the receiver 15 to other equipment, utilization of contents having relatively high degree of freedom can be performed while realizing protection of the copyright of contents. It is to be noted that in the case where there are plural DRM systems, transfer of the license may be permitted only between equipments employing the same DRM system.

While explanation has been given above in connection with the case of the contents distribution system of designating contents to be down-loaded (or contents to be reproduced by streaming) to acquire contents from the contents server 12, the present invention can be applied also in the case of the contents distribution system in which contents are multi-cast from the contents server 12.

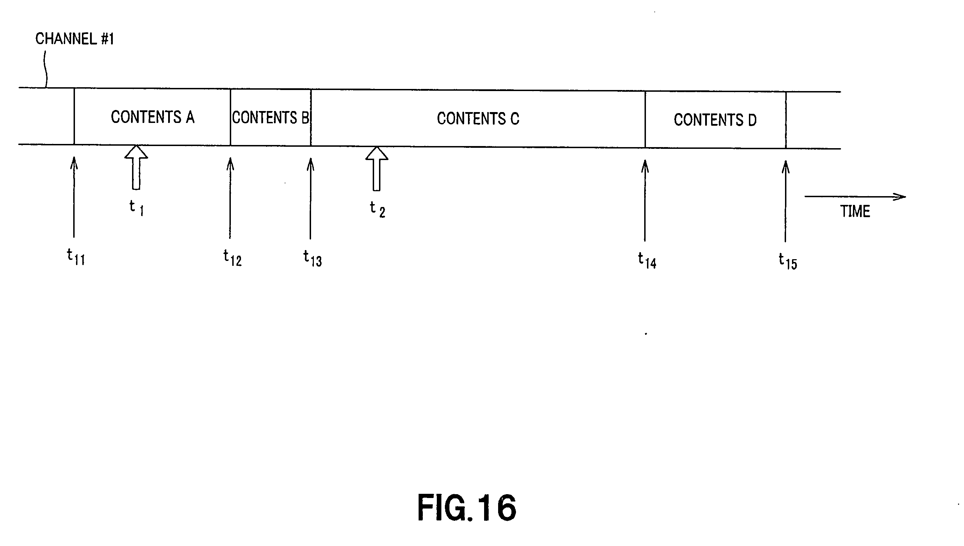

FIG. 16 is a view showing an example of contents distributed by multicast. In the contents distribution by multicast, contents are distributed successively in terms of time along the schedule that the distribution entrepreneur performs management.

In the example of FIG. 16, contents A to D are distributed via channel #1 in order recited. For example, in the case where user provides an access to channel #1 (provides an access to server) at time t1, it is possible to utilize the contents A from the middle. In the case where user provides an access to the channel #1 at time t2, it is possible to utilize the contents C from the middle.

In such contents distribution system by the multicast, in the case where utilization conditions of respective contents are prescribed by the main license and the sublicense distributed along with contents as described above, when the receiver 15 provides an access to the channel #1, e.g., at time t11 when distribution of the contents A is started, it is necessary to perform, before reproduction of the contents A is started, confirmation of the utilization conditions by the main license and the sublicense distributed along with contents A at times subsequent to time t11. Further, the receiver 15 confirms that utilization conditions prescribed by the main license and the sublicense are both satisfied thereafter to reproduce the contents A.

Moreover, when there results t12 when, e.g., distribution of contents A is completed and distribution of contents B subsequent to the contents A is started, the receiver 15 performs, before reproduction of the contents B is started, confirmation of utilization conditions of the main license and the sublicense distributed along with the contents B at times subsequent to time t12 to confirm that utilization conditions prescribed by the main license and the sublicense are both satisfied thereafter to output the contents B. This similarly applies even at other times t13 to t15 when contents to be distributed are switched.

Accordingly, in the contents distribution system by the multicast, in the case where sublicense which prescribes the utilization condition of contents are distributed along with the contents as described above, seamless output of contents cannot be performed. Namely, for a time period during which confirmation of the utilization condition of the contents B is being performed which corresponds to time period from the time when output of the contents A has been completed until output of the contents B is started, it is impossible to output contents.

In view of the above, there may be also employed an approach in which sublicense of the first contents precedently distributed and sublicense of the second contents distributed subsequently to the first contents are caused to be distributed along with the first contents, and sublicense of the second contents is offered in advance to the receiver 15 during distribution of the first contents thus to ensure seamless output of contents.

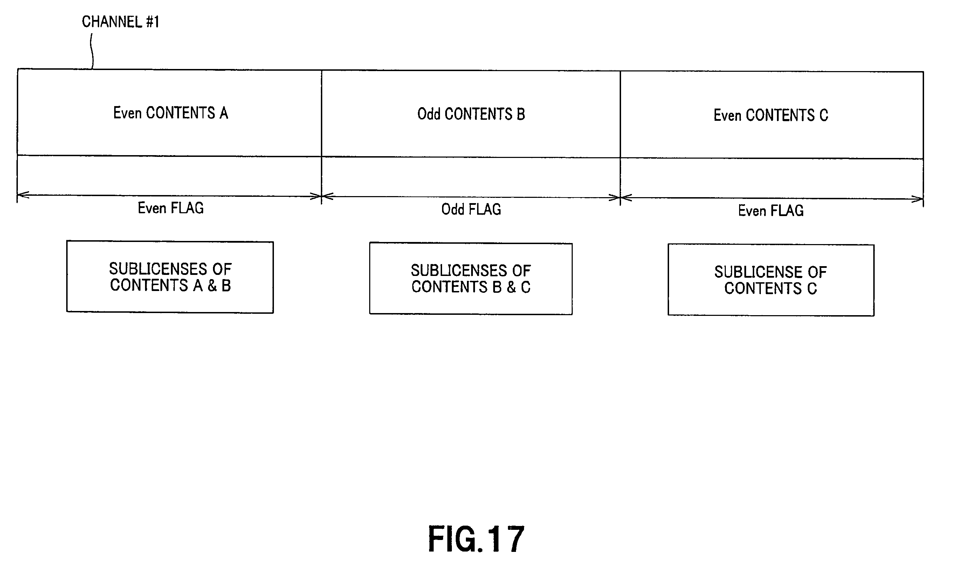

FIG. 17 is a view showing contents distribution in which sublicense of the first contents distributed precedently and sublicense of the second contents distributed subsequently to the first contents are distributed along with the first contents.

In the example of FIG. 17, contents A to C are distributed via channel #1 successively in terms of time, and are received by the receiver 15 in order recited.

The contents A are distributed by distribution data along with sublicense corresponding to the contents A (sublicense corresponding to Even) and sublicense corresponding to contents B distributed subsequently to the contents A (sublicense corresponding to Odd). Flag of "Even" is assigned to contents A, and flag of "Even" is set at respective packets constituting the contents A.

In the case where the receiver 15 reproduces the contents A, it confirms, by the sublicense and main license from setting of flag, by using sublicense of corresponding contents A, whether or not utilization of contents A is permitted. When the receiver 15 has confirmed that reproduction of the contents A is permitted, it reproduces the contents A.

Moreover, the receiver 15 confirms, on the basis of the sublicense and the main license of the contents B distributed along with the contents A for a time period during which contents A are reproduced (during distribution of contents A) as to whether or not utilization of the contents B distributed subsequently to the contents A is permitted. Namely, during distribution of the contents A, whether or not utilization of contents B subsequently distributed is permitted is confirmed in advance.

When distribution of the contents A is completed and distribution of the contents B is started, the receiver 15 switches license used into sublicense corresponding to the contents B in accordance with the fact that flag of the packet is switched from "Even" into "Odd", and starts output of the contents B in accordance therewith.

Sublicense of contents subsequently distributed is offered to the receiver 15 along with sublicense precedently distributed in a manner stated above. Thus, the receiver 15 can confirm, in advance, utilization condition of contents subsequently distributed. As a result, it is possible to ensure seamless output of contents.

In the example of FIG. 17, sublicense of contents B and sublicense of contents C subsequently distributed are distributed along with the contents B. Moreover, sublicense of contents C is distributed along with the contents C.

Moreover, while it has been described above that sublicense of the contents A and sublicense of the contents B (sublicense of the entirety of the contents B) are provided along with the contents A, sublicense of the entirety of the contents A and sublicense which further prescribes utilization condition of time period of several seconds from the start within the sublicense of the contents B may be provided.

In this case, at the time of starting reproduction of the contents A, whether or not reproduction of contents A can be made is confirmed on the basis of utilization condition of the entirety of the contents A provided. As a result, when reproduction of the contents A can be made, the contents A are reproduced by the reproducing unit 105 in a manner as described above. At this time, contents key Kc2 of the contents A is offered to the contents decoding unit 104.

Further, during reproduction of the contents A, whether or not reproduction of only time period of several seconds after start of the contents B can be made is confirmed on the basis of utilization condition only of time period of several seconds after start of the contents B. In the case where reproduction of only time period of several seconds after start of the contents B can be made, only time period of several seconds after start of the contents B is reproduced by the reproducing unit 105 continuously after reproduction of contents A has been completed.

When flag indicating switching of contents is changed from "Even" to "Odd" during reproduction of the contents A, reproduction stop of contents A is instructed. In the case where it is confirmed in advance that reproduction of time period of several seconds after start of the contents B is permitted, reproduction of that time period is performed on the basis of the contents key Kc2 of the contents B. Thus, it is possible to reproduce contents B in a seamless manner subsequently to the contents A.

Moreover, when reproduction stop of the contents A is instructed, utilization condition of the entirety of the contents B is delivered to the utilization condition conformation unit 109. For a time period during which the time period of several periods of contents B is reproduced, utilization condition of the entirety thereof is confirmed. Thus, reproduction of the entirety of the condition B is started subsequently to reproduction of the contents B for several seconds during reproduction.

Similar processing is performed also with respect to the contents C. Namely, during reproduction of contents B (the entirety of contents B), sublicense which prescribes utilization condition of only time period of several seconds after start of the contents C provided is conformed at that time. Thus, when reproduction of the contents B is completed, partial reproduction of the contents C is started.

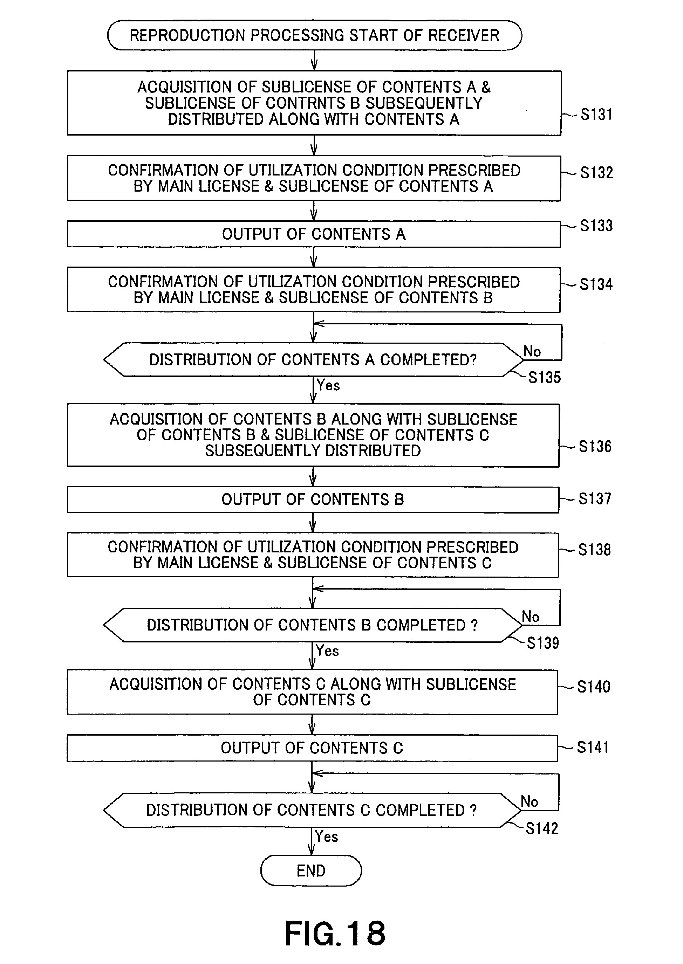

Here, the processing of the receiver 15 adapted for reproducing, in a seamless manner, respective contents in the case where contents of FIG. 17 are distributed will be explained with reference to the flowchart of FIG. 18.

For example, in the case where access to the channel #1 is provided at a timing when distribution of contents A is started, the receiver controller 101 of the receiver 15 acquires, at step S131, along with contents A, sublicense of the contents A and sublicense of the contents B distributed subsequently to the contents A. In this case, distribution data including contents A, sublicense which prescribes utilization of the contents A and sublicense which prescribes utilization condition of the contents B are received by the receiver controller 101.

At step S 132, the DRM controller 102 allows the utilization condition confirmation unit 109 to confirm utilization condition prescribed by the main license and the sublicense of the contents A. Namely, sublicense of the contents A which have been received by the receiver controller 101 is decoded by using contents key Kc1 by the sublicense decoding unit 106. The sublicense thus decoded is outputted to the utilization condition confirmation unit 109.

In the case where utilization of the contents A is permitted, the receiver controller 101 controls, at the step S 133, contents decoding unit 104, etc. to output contents A. Thus, user can utilize contents A.

For a time period during which output of the contents A is performed, the DRM controller 102 allows the utilization condition conformation unit 109 to confirm, in advance, at step S134, the main license and utilization condition prescribed by the sublicense of the contents B before distribution of the contents B is started.

At step S135, the receiver controller 101 judges whether or not distribution of the contents A is completed. Until it is judged that such distribution is completed, the receiver controller 101 stands by to continue output of the contents A. On the other hand, in the case where the receiver controller 101 has judged at the step S 135 that distribution of the contents A is completed, processing by the receiver controller 101 proceeds to step S 136.

Processing subsequent to the step S 136 are similar to the processing of the above-described steps S131 to S135. Namely, at the step S136, the receiver controller 101 acquires the contents B along with the sublicense of the contents B and the sublicense of the contents C distributed subsequently to the contents B.

In the case where the DRM controller 102 has judged at step S 137 on the basis of the result of the confirmation performed at the step S134 that utilization of the contents B is permitted, it controls the contents decoding unit 104, etc. to output the contents B. Since whether or not utilization of the contents B is permitted is confirmed in advance before distribution of the contents B is started, it is unnecessary to perform confirmation of permission, thus making it possible to output the contents B subsequently to the contents A.

For a time period during which output of the contents B is performed, the DRM controller 102 allows the utilization condition confirmation unit 109 to confirm, in advance, at step S138, before distribution of the contents is started, utilization condition prescribed by the main license and sublicense of the contents C.

At step S139, the receiver controller 101 judges as to whether or not utilization of the contents B is completed. Until the receiver controller 101 has judged that such distribution has been completed, it stands by to continue output of the contents B.

On the other hand, in the case where the receiver controller 101 has judged at step S 139 that distribution of the contents B has been completed, processing by the receiver controller 101 proceeds to step S140 to acquire the contents C along with sublicense of the contents C.

In the case where the DRM controller 102 has judged at step S 141 on the basis of the result of the confirmation which has been performed at the step S138 that utilization of the contents C is permitted, it controls the contents decoding unit 104, etc. to output the contents C. Thus, contents C are outputted subsequently to the contents B.

At step S142, the receiver controller 101 judges as to whether or not distribution of the contents C has been completed. Until it is judged that such distribution has been completed, the receiver controller 101 stands by. In the case where it is judged at the step S 142 that distribution of the contents C has been completed, processing by the receiver controller 101 is completed.

Processing similar to the above-mentioned processing is performed also in the case where other contents are multi-cast. Thus, seamless output of contents is ensured.

While it has been described above that distribution of contents is performed through the Internet 11, such distribution may be performed through BS (Broadcasting Satellite) service, CS (Communications Satellite) broadcast or Terrestrial Digital Broadcast.

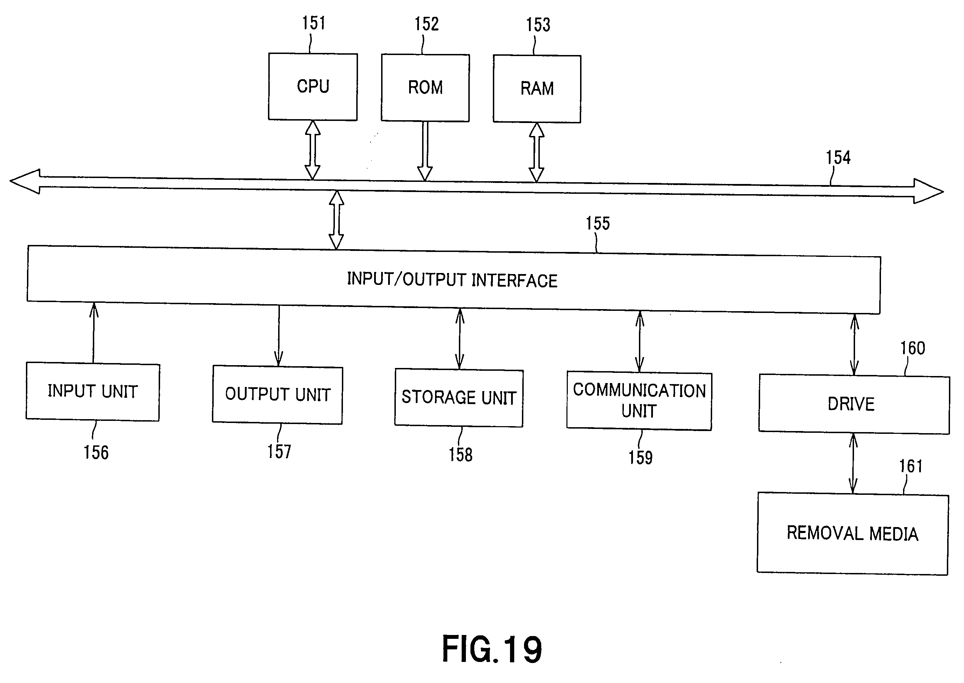

While the above-described series of processing can be also executed by the hardware, those processing may be also executed by software. In this case, an apparatus adapted for executing that software is constituted by, e.g., personal computer as shown in FIG. 19.

In FIG. 19, a CPU (Central Processing Unit) 151 executes various processing in accordance with program stored in a ROM (Read Only Memory) 152, or program which has been loaded from a storage unit 158 into a RAM (Random Access Memory) 153. Into the RAM 153, data, etc. necessary when the CPU151 executes various processing are further stored as occasion demands.

The CPU151, the ROM152 and the RAM153 are mutually connected through a bus 154. To the bus 154, an input/output interface 155 is also connected.

To the input/output interface 155, there are connected an input unit composed of keyboard and mouse, etc., a display unit comprised of LCD (Liquid Crystal Display), etc., and a communication unit 159 for performing communication through the Internet 11.

To the input/output interface 155, a drive unit 160 is connected as occasion demands, and a removable medium 161 comprised of optical disc, magneto-optical disc or semiconductor memory, etc. is suitably loaded. Computer program which has been read out from the removal medium 161 is installed into the storage unit 158 as occasion demands.

In the case where a series of processing are executed by software, program constituting that software is installed from the network or the recording medium.

As shown in FIG. 19, this recording medium is constituted not only by magnetic disk (including flexible disk), optical disk (including CD-ROM, or DVD (Digital Versatile Disk)), magneto-optical disk (including MD (Registered Trademark) (Mini-Disk)), or removable disk 161 comprised of semiconductor memory, etc. on which programs are recorded, which are distributed for offering program to user, but also constituted by ROM 152 or storage unit 158 where programs are recorded, which are offered to user in the state assembled in advance in the apparatus.

It is to be noted that, in the explanation of the present invention, steps which describe programs recorded on recording medium include, of course, processing performed in a time series manner, in accordance with order described, but also includes processing executed in parallel or individually without being limited to processing performed in a time series manner.

In addition, in the explanation of the present invention, the system represents the entirety of the apparatus composed of plural units.

It is to be noted that while the invention has been described in accordance with certain preferred embodiments thereof illustrated in the accompanying drawings and described in the above description in detail, it should be understood by those ordinarily skilled in the art that the invention is not limited to the embodiments, but various modifications, alternative constructions or equivalents can be implemented without departing from the scope and spirit of the present invention as set forth and defined by the appended claims.

## Claims

1. A license management method of performing management of license used in a contents distribution service in which contract of one channel is made so that plural contents distributed via the one channel are permitted to be utilized,
the license management method comprising:
offering, to an information processing apparatus which accepts an offer of contents, a first license which prescribes utilization condition of the entirety of plural contents distributed via the one channel; and
offering, to the information processing apparatus, along with contents, a second license which prescribes, in a manner different from the first license, utilization condition every contents,
whereby in the case where the utilization condition prescribed by the first license and the utilization condition prescribed by the second license are both satisfied, the contents which have been offered along with the second license are permitted to be utilized at the information processing apparatus.

2. An information processing apparatus adapted for processing contents provided by a contents distribution service in which contract of one channel is made so that plural contents distributed via the one channel are permitted to be utilized,
the information processing apparatus comprising:
first acquisition means for acquiring a first license which prescribes utilization condition of the entirety of plural contents distributed via the one channel;
second acquisition means for acquiring, along with contents, a second license which is provided in a manner different from the first license and prescribes utilization condition every contents; and
control means for controlling output of the contents which have been provided along with the second license in the case where the utilization condition prescribed by the first license and the utilization condition prescribed by the second license are both satisfied.

3. The information processing apparatus as set forth in claim 2,
wherein the first acquisition means serves to acquire the first license provided in the state encrypted by a public-key corresponding to a secret-key to be prepared.

4. The information processing apparatus as set forth in claim 2,
wherein the control means decodes, by using first key information provided along with the first license, second key information provided in the state encrypted along with the second license to decode encryption implemented to the contents by the second key information thus decoded.

5. The information processing apparatus as set forth in claim 2, further comprising:
license management means for allowing any other information processing apparatus to permit utilization of the contents which have been provided along with the second license within the scope where the utilization condition prescribed by the first license and the utilization condition prescribed by the second license are both satisfied.

6. The information processing apparatus as set forth in claim 2,
wherein in the case where plural contents are distributed via the one channel successively in terms of time, the second acquisition means serves to acquire, during distribution of the first contents, the second license which prescribes utilization condition of second contents distributed subsequently to first contents, and the control means controls output of the second contents so that the second contents are outputted subsequently to the first contents in the case where the utilization condition prescribed by the first license and the utilization condition prescribed by the second license which prescribes the utilization condition of the second contents, which has been acquired by the second acquisition means, are both satisfied.

7. An information processing method of processing contents provided by a contents distribution service in which contract of one channel is made so that plural contents distributed via the one channel are permitted to be utilized,
the information processing method comprising:
a first acquisition step of acquiring a first license which prescribes utilization condition of the entirety of plural contents via the one channel;
a second acquisition step of acquiring, along with contents, a second license which is provided in a manner different from the first license and prescribes utilization condition every contents; and
a control step of controlling output of the contents provided along with the second license in the case where the utilization condition prescribed by the first license and the utilization condition prescribed by the second license are both satisfied.

8. A program for allowing computer to execute processing of contents provided by a contents distribution services in which contract of one channel is made so that plural contents distributed via the one channel are permitted to be utilized,
the program comprising:
a first acquisition step of acquiring a first license which prescribes utilization condition of the entirety of plural contents distributed via the one channel;
a second acquisition step of acquiring, along with contents, a second license which is provided in a manner different from the first license and prescribes utilization condition every the contents; and
a control step of controlling output of the contents which have been provided along with the second license in the case where the utilization condition prescribed by the first license and the utilization condition prescribed by the second license are both satisfied.
